# EUROPEAN PATENT SPECIFICATION

(11) **EP 4 454 327 B1**
(45) Date of publication and mention of the grant of the patent: **21.10.2026**
(21) Application number: 22716858.0
(22) Date of filing: 17.03.2022
(51) Int. Cl.: H04W 52/24, H04L 5/00, H04J 11/00, H04W 52/28, H04W 72/542

(54) **INTERFERENCE MEASUREMENT TECHNIQUE**
INTERFERENZMESSTECHNIK
TECHNIQUE DE MESURE D'INTERFÉRENCE

(30) Priority: 22.12.2021 GR 20210100908
(43) Date of publication of application: 30.10.2024
(73) Proprietor: Telefonaktiebolaget LM Ericsson (publ), 164 83 Stockholm (SE)
(72) Inventor: ASTELY, David, 168 56 Bromma (SE); WERNER, Karl, 141 72 Segeltorp (SE); PITAROKOILIS, Antonios, 114 22 Stockholm (SE); APELFRÖJD, Rikke, 741 30 Knivsta (SE)
(74) Representative: Murgitroyd & Company
(86) International application number: PCT/EP2022/056999
(87) International publication number: WO 2023/117152

(56) References cited:
- WO-A1-2021/198928
- US-A1- 2019 281 487

## Description

### Technical Field

The present disclosure relates to a technique for an interference measurement. More specifically, and without limitation, methods and devices are provided for controlling a distortion for an interference measurement by controlling a power in a radio transmission of orthogonal frequency-division multiplexing symbols from a network node to a radio device.

### Background

The performance of wireless communication systems dependents on the channel quality of a radio channel between the radio device, which is also referred to as user equipment (UE), and a network node serving the UE. More specifically, the mobile connectivity of wireless communication systems is influenced by the position of the UE within a cell of a radio access network (RAN) and an interference level at the UE. The position influences the channel quality because of attenuation along the distance relative to the network node serving the UE and because the environment of the UE may absorb or obstruct radio propagation. The interference level at the UE may be caused by other UEs in the same cell or neighboring network nodes of the RAN.

Furthermore, wireless communication systems according to the Fourth Generation (4G) such as Long Term Evolution (LTE) or the Fifth Generation (5G) such as New Radio (5G NR) specified by the 3^{rd} Generation Partnership Project (3GPP) use Orthogonal Frequency-Division Multiple Access (OFDMA) to share available radio resources in time and frequency among the UEs, wherein a scheduler of the serving network node allocates the radio resources to the UEs. Therefore, the performance of wireless communication systems also dependents on the network load.

For evaluating the channel quality at the UE, 3GPP has defined several channel indicators including channel state information (CSI) feedback which can include a rank indicator (RI), a pre-coder matrix indicator (PMI) as well as channel quality indicator (CQI). The rank indicator may be seen as a recommendation on the number of spatially multiplexed data layers, PMI may be used as a recommendation for how to pre-code the layers conditioned on the RI, and the CQI may be used as a recommendation for the modulation and coding scheme (MCS) conditioned on the RI and the PMI, the received Signal Strength Indicator (RSSI) and Reference Signal Received Quality (RSRQ). These channel indicators are influenced by all three main factors for the mobile connectivity including the position of the UE within the cell, the interference level at the UE, and the data traffic of all UEs in the same cell.

The network node receives CSI reports from the UEs and controls spatial multiplexing, pre-coding, setting of transmit powers, modulation, channel coding and scheduling of the data traffic based on the CSI reports to ensure the network performance. Therefore, the measurement of the interference level at the UE plays an important role in the CSI reports for improving reliability and data rate.

However, the network node can cause a distortion on radio resources used to perform an interference measurement (IM, e.g., a CSI-IM). The distortion depends on signals and channels transmitted on the same orthogonal frequency-division multiplexing (OFDM) symbols that is configured for the IM, i.e., the OFDM symbol to which radio resources of the IM are mapped. The distortion is typically greater if power transmitted in the respective OFDM symbols is greater, for example due to a crest factor reduction (CFR) such as clipping and filtering.

Document US 2019/281487 A1 teaches systems and methods for wireless communications, and, in particular embodiments, a system and method for channel measurement in wireless network.

Document WO 2021/198928 A1 teaches wireless communication and in particular channel quality indication (CQI) saturation mitigation.

### Summary

The present invention is defined in the appended independent claims. Particular realizations of the invention are defined in the appended dependent claims.

Accordingly, there is a need for an interference measurement technique that improves the accuracy of channel quality reported to a network node to enable a radio communication closer to the channel capacity, particularly at higher data rates, at least in some scenarios.

As to a method aspect of the technique, a method of controlling a distortion for an interference measurement (IM) by controlling a power in a radio transmission of orthogonal frequency-division multiplexing (OFDM) symbols from a network node to a radio device is provided. The method comprises or initiates a step of transmitting, from the network node to the radio device, at least one IM symbol out of the OFDM symbols. The at least one IM symbol comprises zero power resource elements (ZP REs), and zero or more non-zero power resource elements (NZP REs). A set of the ZP REs is allocated to the IM at the radio device, and the power in subcarriers outside of the set and in each of the at least one IM symbol is less than or equal to a power in the subcarriers outside of the set and in another symbol out of the OFDM symbols other than the at least one IM symbol. The method further comprises or initiates a step of receiving at least one channel state information (CSI) report from the radio device, wherein the CSI report is indicative of a result of the IM based on the transmitted at least one IM symbol.

The one or more other symbols out of the OFDM symbols other than the at least one IM symbol may also be referred to as non-IM symbols.

The power of any one of the OFDM symbols may be referred to as an OFDM symbol power (e.g., a total power) of the respective one of the OFDM symbols, e.g., the sum of the power of the resource elements (REs) in the respective one of the OFDM symbols or an integral of energy over a symbol length of the respective one of the OFDM symbols divided by the symbol length. Each RE (e.g., each NZP RE) may correspond to one modulation symbol (e.g., a quadrature amplitude modulation, QAM, symbol), so that the OFDM symbol power may correspond to the sum of the modulation symbol power in the respective OFDM symbol.

Hereinafter, OFDM symbol power is briefly referred to as symbol power, unless it is stated otherwise (e.g., for the modulation symbol power of a modulation symbol such as a QAM symbol). Moreover, an OFDM symbol is briefly referred to as a symbol (e.g., such as an IM symbol or a non-IM symbol), unless it is stated otherwise (e.g., for a modulation symbol such as a QAM symbol). Furthermore, a power spectral density may correspond to the modulation symbol power (e.g., wherein the REs are the units of discretization in the frequency domain).

At least some embodiments can reduce the symbol power (e.g., the total power) of the IM symbol as compared to the symbol power of the other symbol by reducing the power in the subcarriers outside of the set and in the IM symbol compared to the power in the subcarriers outside of the set and in the other symbol, since the power in the ZP REs is also less (e.g., namely zero or essentially zero) compared to the power in the subcarriers of the ZP REs in the other symbol. More specifically, the symbol power of the IM symbol may be reduced beyond a conventional reduction of the symbol power that is merely due the presence of ZP REs for an IM.

Same or further embodiments of the technique can prevent that the IM at the radio device may be limited by a power-dependent distortion at the network node. For a radio device that is limited by a power-dependent distortion at the network node, the reduced power of the IM symbol can enable a more accurate CSI report of the IM (e.g., as part of a CSI measurement) at the radio device without the distortion at the network node contributing to the interference level measured at the radio device. In another words, the CSI report may depend on at least the IM. If the network node receives a CSI report with less distortion (e.g., minimum distortion, or zero distortion), it can select transmission parameters (e.g., power) so that the distortion is not a limiting factor. Hence, at least some embodiments of the technique can enable a more useful (e.g., accurate) CSI measurements so that power-limited distortions are not limiting the data rates, which can result in higher data rates of the radio transmission.

The other symbol may be any other symbol not associated with the IM in the same slot, same subframe or same radio frame comprising the at least one IM symbol. In other words, the other symbol may be any other symbol in which there are no REs used for IM. Alternatively or in addition, the other symbol out of the OFDM symbols other than the at least one IM symbol may be referred to as a non-IM symbol.

In case of two or more (e.g., consecutive) IM symbols, the power in subcarriers outside of the set and in the each of the two or more IM symbols may be less than a power in the subcarriers outside of the set and in one other or any other symbol out of the OFDM symbols other than the two or more IM symbols.

The power in the subcarriers outside of the set and in another symbol out of the OFDM symbols other than the at least one IM symbol may be an average over a plurality of other symbols out of the OFDM symbols other than the at least one IM symbol. Each slot may comprise at least one (e.g., 1, 2 or 3) OFDM symbols for a physical downlink control channel (PDCCH). The remaining 13 to 11 OFDM symbols in the respective slot may comprise a physical downlink shared channel (PDSCH) and/or a demodulation reference signal (DM-RS).

The ZP REs may be muted. Alternatively or in addition, the ZP REs may have zero power, e.g., except for power leaking (i.e., spreading) in subcarriers of the ZP RE from a signal transmitted (or to be transmitted) by the network node in the same IM symbol on subcarriers other than the subcarriers of the ZP RE. The power may be leaking due to a distortion of the signal (e.g., a non-linearity) at the network node, e.g., in a transmit processing chain of the network node for the radio transmission.

The network node (e.g., the transmit processing chain) may comprise at least one of a power amplifier (PA), an up-conversion unit, a peak-to-average-power ratio (PAPR) reduction unit (e.g., implemented in a digital domain or analog domain of the network node), a modem, and a signal processor (e.g., defining the digital domain of the network node). The distortion may be caused by at least one of the PA and the PAPR reduction unit.

The subcarriers outside of the set may comprise all subcarriers of a bandwidth of the radio transmission, e.g., all subcarriers of a carrier of radio transmission, except for the subcarriers used for the IM in the IM symbol (i.e., except for the subcarriers corresponding to the set of REs defined by the ZP CSI-RS).

Each of the at least one CSI report may be indicative of at least one of a rank indicator (RI), a precoding matrix indicator (PMI) and the CQI for the radio transmission.

The at least one CSI report may be any report that is indicative of a result of the IM at the radio device, e.g., CSI or a channel quality indicator (CQI), and/or that depends on a signal to interference and noise ratio (SINR) measured in the IM symbol at the radio device. Alternatively or in addition, the SINR, the signal strength, and/or the channel quality may be measured based on a reference signal (RS, e.g., a NZP CSI-RS) that is not transmitted in the at least one IM symbol (i.e., not in the same symbols as the at least one IM symbol).

Herein, a power (e.g., the power in the subcarriers outside of the set and in the IM symbol or the power in the subcarriers outside of the set and in the other symbol) may refer to input power or output power at any component of the transmit processing chain at the network node or a transmit power of the network node transmitting the respective OFDM symbol. Alternatively or in addition, the power in the subcarriers outside of the set may refer to a sum of the power in the REs outside of the set and in the respective OFDM symbol, i.e., the sum of the power in the REs of the respective OFDM symbol outside of the set. Alternatively or in addition, the power in the subcarriers outside of the set and in the IM symbol may be computed as the symbol power of the IM symbol (or each of the at least one IM symbol), i.e. a sum of the power in the REs in the IM symbol (e.g., all REs in the IM symbol), e.g. because the power in the set of ZP REs is nominally zero and/or approximately zero and/or negligible. For example, the power in the set of ZP REs may be negligible for the comparison with the other symbol and/or for computing the distortion level based on the symbol power, because this would correspond to a second-order correction of the distortion, namely a correction based on the correction, wherein the correction refers to the power leaking into the set of ZP REs due to the distortion.

The power of an OFDM symbol (or the power per OFDM symbol) may also be referred to as an energy of the OFDM symbol (or the energy per OFDM symbol), e.g., up to a factor for the symbol length, i.e., a symbol duration, or by using the symbol length as a unit of time. Alternatively or in addition, the power of an RE (e.g., the power per RE) may also be referred to as power spectral density, e.g., up to a factor for the subcarrier spacing (SCS) or by using the SCS as a unit of frequency.

Herein, power reduction, reduced power or reducing the power may refer to the symbol power of the at least one IM symbol. In contrast, power setting, set power or setting the power may refer to a change in (i.e., adjusting of) the power responsive to and/or based on the at least one received CSI report, e.g., for a plurality of slots or subframes or radio frames and/or for all symbols or at least non-IM symbols.

The setting of the power may be implemented by scaling the symbol power for one or a plurality of OFDM symbols.

The reducing of the power may be implemented by scaling the power of a subset of the NZP REs in the at least one IM symbol and/or by muting at least one RE outside of the set and in the at least one IM symbol.

Herein, a power back-off of an OFDM symbol may refer to a ratio between a nominal power and the symbol power of the OFDM symbol. The power back-off may be a measure for reducing the power and/or for setting the power relative to the nominal power. Alternatively or in addition, the power back-off may refer to a reduction of power at the network node, e.g., relative to the nominal power. The power reduced according to the power back-off may be an input power of a power amplifier (PA) at the network node for the radio transmission. Alternatively or in addition, the power that is set or reduced according to the power back-off may be an input power of a PAPR reduction unit at the network node for the radio transmission. Alternatively or in addition, the power that is set or reduced according to the power back-off may be power (e.g., an output power) of a baseband signal (e.g., in the digital domain and/or generated by the signal processor of the network node, or in the analog domain and/or generated by a modem) for the radio transmission. Alternatively or in addition, the power that is scaled or reduced according to the power back-off may be power of a baseband signal (e.g., in the digital domain and/or generated by the signal processor of the network node in time domain or frequency domain) for the radio transmission. The power back-off may refer to a ratio for a RE. The power back-off does not necessary mean that the same power back-off is applied to all subcarriers in an OFDM symbol.

An output of the modem and/or the signal processor may be input to the PAPR reduction unit (e.g., implemented in an analog domain of the network node) and/or the PA, optionally after scaling the signal according to the power back-off. Alternatively or in addition, a baseband signal may be input to the PAPR reduction unit (e.g., implemented in the digital domain of the network node), optionally after scaling the baseband signal according to the power back-off.

Herein, setting the power (e.g., power scaling, or briefly: setting or scaling) may refer to changing (e.g., adjusting) the power for the radio transmission (e.g., according to the power back-off) for a plurality of OFDM symbols or a plurality of slots. The set power or a scaling factor (i.e., a parameter of the scaling) may be constant for a plurality of OFDM symbols or a plurality of slots. For example, a mean symbol power, i.e. the symbol power averaged over a plurality of OFDM symbols and/or one or multiple slots and/or a plurality of the other OFDM symbols, may be set by scaling a baseband signal, e.g., on a time scale that comprises one or multiple slots. The baseband signal may be scaled based on the received at least one CSI report.

The scaling may comprise scaling of a signal power for a modulation symbol (e.g., a complex value in a constellation plane, e.g., a quadrature phase shift keying (QPSK) or quadrature amplitude modulation (QAM) symbol) transmitted on any of the REs, i.e. a modulation symbol transmitted on a subcarrier in an OFDM symbol. The same scaling factor should not be applied (e.g., not necessarily applied) to all REs.

For example, if there are REs which are not used for data (PDSCH and DMRS), such as a NZP CSI-RS, then the network node may choose to not reduce the power on the NZP CSI-RS but only on the REs used for PDSCH and DMRS.

Alternatively or in addition, the symbol power of the at least one IM symbol may be set or changed individually for the at least one IM symbol and/or dynamically and/or in addition to the scaling and/or independently of the scaling by setting or changing the number of ZP REs and/or the number of NZP REs in the IM symbol, which may also be referred to as power reducing (or briefly: reducing). The reduced power of the IM symbol may be a result of a linear combination of the number of ZP REs and the number of NZP REs.

An average power of a (e.g., hypothetical) OFDM symbol may correspond to an average of the power spectral density in the subcarriers outside of the set and in the other symbol of the OFDM symbols other than the at least one IM symbol. Alternatively or in addition, a nominal power of a (e.g., hypothetical) OFDM symbol may correspond to a maximum of the power spectral density in the other symbol of the OFDM symbols other than the at least one IM symbol (or in slots not including IM symbols). Alternatively or in addition, the symbol power of each of the at least one IM symbol may be referred to as a reduced power.

A ratio between the reduced power and the nominal power may be referred to as the power back-off.

The network node may use the CSI report to set the power (e.g., to set the power back-off) of a data transmission in the at least one IM symbol and/or a data transmission in the non-IM symbols. Therefore, in some embodiments the reduced power of the at least one IM symbols may be the same as the power in non-IM symbols (e.g., the average power), e.g., after setting the power based on the CSI report. In other embodiments, the power of the non-IM symbols (e.g., the average power, optionally in slots other than the slots comprising the at least one IM symbol) may be greater than the reduced power of the at least one IM symbol.

Above definitions or relations for the power (e.g., for the symbol power, the nominal power, the reduced power, and/or the power back-off) may be applied in the digital domain and/or to the baseband signal. Alternatively or in addition, corresponding definitions and relations may apply for the power at the PA and/or in the analog domain, e.g. wherein the corresponding expressions may be referred to as transmit power instead of power, e.g., for the symbol transmit power (instead of the symbol power), the nominal transmit power (instead of the nominal power), the reduced transmit power (instead of the reduced power), and/or the power back-off.

For example, the radio transmission of the OFDM symbols from the network node to the radio device may use the power amplifier (PA) of the network node. The PA may be configured to transmit the OFDM symbols at a nominal transmit power, e.g. full transmit power. The symbol transmit power of the IM symbol when the PA is operating at nominal power may also be referred to as a reduced transmit power. A ratio between the reduced transmit power and the nominal transmit power may be referred to as the power back-off.

The at least one IM symbol may comprise only (or no RE other than) the ZP REs and the zero or more NZP REs. Alternatively or in addition, the power of the at least one IM symbol (e.g., except for power leaking into the ZP REs due to the distortion) may correspond to the total power of the zero or more NZP REs.

The radio devices may determine CSI by performing measurements on so-called CSI reference signals (CSI-RS) which are transmitted or muted (i.e., blanked or empty) in the radio transmission (i.e., in the downlink), optionally in the NZP REs and/or ZP REs of the IM symbol. The CSI-RS resources (i.e., the NZP REs and/or ZP REs allocated for the CSI-RS) are multiplexed on a time-frequency grid (e.g., spanned by the OFDM symbols in the time domain and the subcarriers in the frequency domain) with one or more other radio transmissions from the network node (e.g., to the radio device or another radio device), e.g. comprising at least one of a data transmission on a physical downlink shared channel (PDSCH), its associated demodulation reference signals (DM-RS), and a control signaling on a physical downlink control channel (PDCCH).

The CSI-RS may comprise different types of CSI-RS (i.e., different types of CSI-RS resources). A first type comprises the non-zero power CSI-RS (NZP CSI-RS), optionally in the NZP REs of the IM symbol, which may be used at the radio device to measure the channel state (e.g., to estimate the channel state of the channel) of the radio transmission. In the NZP CSI-RS, the network node may transmit reference signals, i.e. a sequence of symbols known by both the network node as the transmitter and the radio device as the receiver. Optionally, the transmission of the NZP CSI-RS is not altered by the transmitter, e.g., through a precoding filter.

A second type of CSI-RS (i.e., CSI-RS resources) comprises zero-power CSI resources (ZP CSI resources, also: ZP CSI-RS resources or ZP CSI-RS) to perform the IM (also referred to as CSI IM) at the radio device, optionally to estimate the interference level or a noise level (or any other impairments) at the radio device. The ZP CSI-RS may be allocated to ZP REs. Herein, the one or more OFDM symbols comprising the ZP CSI-RS may be referred to as the IM symbol.

The IM (e.g., a CSI IM) may be associated with the set of ZP REs, e.g., four adjacent REs in each PRB over the bandwidth within one OFDM symbol (i.e., one IM symbol), which may also be referred to as 1x4 ZP REs, or two adjacent subcarriers within two adjacent OFDM symbols (i.e., two adjacent IM symbols), which may also be referred to as 2x2 ZP REs.

The network node may serve the radio device, i.e., the network node may be the serving network node of the radio device.

The at least one IM symbol (e.g., according to the method and/or a device aspect) may comprise at least one ZP RE not allocated for the IM at the radio device.

In other words, at least one of the ZP REs is not in the set of the ZP REs allocated to the IM at the radio device.

The power spectral density of at least one NZP RE in subcarriers outside of the set and in the at least one IM symbol (e.g., according to the method and/or a device aspect) is less than a power spectral density in the subcarriers outside of the set and in the other symbol other than the at least one IM symbol.

The other symbol (e.g., according to the method and/or a device aspect) may be in another slot other than a slot comprising the at least one IM symbol. Optionally, a power spectral density of each of the symbols in the slot comprising the at least one IM symbol may be less than a power spectral density of the other symbol or each of the other symbols in the other slot other than the slot comprising the IM symbol.

In some embodiments, a transmission on the PDSCH may be performed with a power back-off applied to all symbols of the slot comprising the at least one IM symbol. Hence, the power spectral density of the at least one IM symbol may be equal to the average power spectral density in the same slot. In another embodiment, the power spectral density of the at least one IM symbol in a slot may be less than the power spectral density of an OFDM symbol or all OFDM symbols in another slot without IM symbols, e.g. where the nominal power (e.g., full power) is used.

The power spectral density of the at least one NZP RE in subcarriers outside of the set and in (e.g., each of) the at least one IM symbol may be equal to or less than (e.g., for each RE outside of the set and/or in the same physical resource block) a power spectral density in the subcarriers outside of the set and in the other symbol.

The method may further comprise or initiate a step of setting a power of at least one or each future OFDM symbol out of the OFDM symbols (e.g., by setting a power of at least one RE in the respective or same OFDM symbol), wherein the set power depends on the received at least one CSI report. Alternatively or in addition, the method may further comprise or initiate a step of setting a power of at least one or each future other symbol out of the OFDM symbols other than IM symbols, wherein the set power depends on the received at least one CSI report. Alternatively or in addition, the method may further comprise or initiate a step of setting a power of at least one or each future IM symbol out of the OFDM symbols, wherein the set power depends on the received at least one CSI report.

The setting may comprise setting the power of at least one or each resource element (RE) in the respective symbol. Alternatively or in addition, the set power may be a decreasing function of a channel quality indicated by the received at least one CSI report.

Alternatively or in addition, the set power may be an increasing function of a distance or a pathloss between the network node and the radio device. For example, a radio device at a central area of a cell of the network node (i.e., a cell center radio device) may have a pathloss that is less than compared to a radio device at or close to an edge of the cell of the network node (i.e., a cell edge radio device).

Alternatively or in addition, the set power may be decreased until a channel quality indicated by the at least one CSI report assumes a maximum or plateau. For example, the network node may gradually decrease the power until at least one radio device (e.g. a cell center radio device) reports a very high channel quality (e.g., a channel quality greater than a predefined threshold).

The setting (e.g., scaling) of the power may apply to OFDM symbols of a future transmission of the network node on the radio transmission, e.g., after receiving the CSI report or in response to the received CSI report. Alternatively or in addition, the PA of the network node may be configured to transmit the OFDM symbols using the set (e.g., scaled) power. In some embodiments, the power may be set (e.g., scaled) in the baseband signal (e.g., on RE level before the OFDM modulator or inverse fast Fourier transformation, IFFT). The time domain signal of the OFDM symbols may be input to the PA after the OFDM modulator or IFFT.

As a first example, if the radio device (e.g., one of a plurality of radio devices served by the network node) is in a center position of a coverage area of the cell covered (e.g., served) by the network node, the CSI report may be indicative of a first (e.g., high) SINR or a first (e.g., good) CQI triggering that the scaled power (e.g., power of future OFDM symbols) is less than the nominal power, e.g., since the radio link quality is good (e.g., as indicated by the SINR or CQI) and no distortion was introduced by the network node (e.g., by the PA and/or the PAPR reduction unit) in the IM symbol due to the reduced power of the IM symbol. In other words, for the radio device at the center position, the advantage of decreasing the distortion caused at the network node by reducing the power in the scaling can outweigh the disadvantage of decreasing strength of the signal received at the radio device, e.g. if the distortion is greater than the noise and/or interference at the radio device.

As a second example, if the radio device (e.g., one of a plurality of radio devices served by the network node) is at an edge of the coverage area of the cell covered (e.g., served) by the network node, the CSI report may be indicative of a second (e.g., low) SINR or a second (e.g., poor) CQI, e.g., because of noise and/or interference (e.g., inter-cell interference caused by a neighboring network node of the network node) measured in the IM at the radio device. The CSI report may trigger that the scaled power (e.g., power of future OFDM symbols) is equal to the nominal power, e.g., since the noise and/or interference at the radio device is greater than the distortion caused by the network node operating at the nominal power or even in the non-linear regime. In other words, for the radio device at the edge, the advantage of increasing the strength of the signal received at the radio device can outweigh the disadvantage of the distortion caused at the network node when increasing the signal strength by the scaling.

The first SINR may be greater than the second SINR. Alternatively or in addition, the first CQI may be greater than the second CQI. The first and second examples may be combined, e.g., in that the network node serves a plurality of radio devices and the method is applied (e.g., individually or in groups) for each of the radio devices.

The method may further comprise or initiate a step of obtaining a nominal power for the OFDM symbols. The nominal power may be indicative of the power in the subcarriers outside of the set and in the other symbol.

Alternatively or in addition, the method may further comprise or initiate a step of obtaining a reduced power for the at least one IM symbol and/or a reduced power for at least one or each future IM symbol. The reduced power may be indicative of the power in the subcarriers outside of the set and in the respective IM symbol.

Alternatively or in addition, the method may further comprise or initiate a step of obtaining a power back-off for the at least one IM symbol and/or a power back-off for at least one or each future IM symbol. The power back-off may be indicative of the power in the subcarriers outside of the set and in the respective IM symbol relative to the power in the subcarriers outside of the set and in the other symbol.

The nominal power may correspond to a maximum of the symbol power of the other symbols other than the at least one IM symbol. Alternatively or in addition, the reduced power may correspond to the symbol power of the at least one IM symbol. Alternatively or in addition, the scaled power may correspond to an average of the symbol power of the other symbols other than the at least one IM symbol.

The nominal power and/or the reduced power may be obtained by computing the nominal power and/or the reduced power at the network node. Alternatively or in addition, the nominal power and/or the reduced power may be obtained by receiving a control message indicative of the nominal power and/or the reduced power from another network node (e.g., a neighboring network node) or from an Operations, Administration and Maintenance (OAM) node.

The set power (e.g., according to the method and/or a device aspect) may be at least one of equal to or greater than the reduced power, equal to or less than the nominal power, and obtained based on the received at least one CSI report.

The reduced power of the at least one IM symbol out of the OFDM symbols may be obtained based on the received at least one CSI report. Optionally, the reduced power may be a (e.g., monotonically) decreasing function of a channel quality indicated by the received at least one CSI report. Alternatively or in addition, the reduced power may be an increasing function of a distance or a pathloss between the network node and the radio device. Alternatively or in addition, the reduced power may be decreased until a channel quality indicated by the at least one CSI report assumes a maximum or plateau, optionally starting from the nominal power.

Alternatively or in addition, the reduced power may be increased until a channel quality indicated by the at least one CSI report assumes a maximum or plateau, optionally starting from a minimum of the reduced power or a maximum of the power back-off.

Alternatively or in addition, the reduced power of the at least one IM symbol or the at least one or each future IM symbol out of the OFDM symbols may be an increasing function of a distance or a pathloss between the network node and the radio device.

The network node (e.g., according to the method and/or a device aspect) may comprise at least one of a power amplifier (PA) for the radio transmission and a peak-to-average-power ratio (PAPR) reduction unit for the OFDM symbols of the radio transmission.

The reduced power may be in a linear region of at least one of the PA and the PAPR reduction unit. Alternatively or in addition, the nominal power may be an upper limit of the linear region of at least one of the PA and the PAPR reduction unit.

The scaling of the power may be applied at an input of at least one of the PA and the PAPR reduction unit. According to some embodiments, the input power of the PAPR unit is reduced so that because of the power being reduced, the level of distortions will consequently reduce as well.

The PAPR reduction unit may be configured to reduce the PAPR of a signal to be transmitted from an antenna for the radio transmission prior to amplifying the antenna signal in the PA. The PA may comprise the PAPR reduction unit (e.g., implemented in the analog domain). Alternatively or in addition, the PA may comprise a linearization unit (e.g., a digital pre-distortion, DPD, unit) configured to compensate or reduce the non-linearity of the PA.

For example, the network node may comprise a radio unit (which may convert the baseband signal from the digital domain to the analog domain). The radio unit may comprise at least one of the PAPR reduction unit, the DPD unit and an up-conversion unit. Alternatively or in addition, the network node may comprise a baseband unit (BBU) and a RF processing unit (e.g., remote radio unit, RRU). The BBU may embody the digital domain. The RF processing unit may be an embodiment of the radio unit that is not collocated with the BBU.

Alternatively or in addition, the PAPR reduction unit may be configured to reduce the PAPR of a digital domain of the OFDM symbols of the radio transmission. Alternatively or in addition, the PAPR reduction unit may be configured to reduce the PAPR of a baseband signal of the OFDM symbols of the radio transmission. The baseband processor may comprise the PAPR reduction unit (e.g., implemented in the digital domain).

The method may further comprise or initiate the step of transmitting a configuration message to the radio device. The configuration message is indicative of at least one of the IM; the IM symbol; the set of ZP REs, optionally one ZP CSI reference signal; the zero or more NZP REs, optionally one NZP CSI reference signal; the nominal power for the OFDM symbols; the reduced power of the at least on IM symbol; and the power back-off of the at least one IM symbol.

The method may further comprise or initiate a step of transmitting a configuration message (or scheduling message) from the network node to the radio device. The configuration message may schedule the IM and/or the at least one IM symbol (e.g., in the time domain) and/or the set of ZP REs (e.g., in the frequency domain). Alternatively or in addition, the scheduling message may be indicative of at least one of a time offset of the at least one IM symbol (e.g., relative to a radio frame of the radio transmission), a periodicity of the at least one IM symbol, a number of the at least one IM symbol, and a configuration of the set of ZP REs. The radio device may not expect data transmission from a network node using the ZP REs in the set. The radio device may use the ZP REs in the set for interference measurement.

The at least one IM symbol may comprise one or more consecutive OFDM symbols.

The zero or more NZP REs (e.g., according to the method and/or a device aspect) may comprise NZP CSI reference signals (NZP CSI RS) and/or data signals and/or demodulation reference signal (DM-RS) of the radio transmission. Alternatively or in addition, the configuration message may be indicative of the NZP CSI RSs allocated to a CSI measurement at the radio device. Alternatively or in addition, the configuration message may be indicative of the scheduling of the data signals. Alternatively or in addition, the CSI report may be indicative of a channel quality indicator (CQI) or a signal-to-interference and noise ratio (SINR) for the radio transmission, e.g., based on a signal strength and based on a power of noise and/or interference measured in the set of ZP REs in the IM at the radio device.

The CSI report may additionally be indicative of a CQI or a SINR for the radio transmission based on a reference signal received power (RSRP) of the NZP CSI RSs measured at the radio device in the CSI measurement. For example, the CSI report may be indicative of the CQI and/or the SINR, which may correspond to a ratio between the RSRP and the power of the noise and/or interference. In some embodiments, the CSI report may be a function of a channel estimate and an interference estimated using the set of ZP REs.

The power spectral density of the NZP CSI RS (e.g., according to the method or a device aspect) may be less than a power spectral density of the data signals of the radio transmission.

A or the reduced power of the at least one IM symbol (e.g., according to the method and/or a device aspect) may correspond to a linear combination of at least two of the ZP REs, the NZP CSI RSs, and the data signals. Optionally, the linear combination may be weighted by the number of REs in the respective IM symbol and/or a power spectral density in the respective IM symbol.

The set may be a proper subset of the ZP REs. That is, there may be at least one ZP RE not allocated to the IM at the radio device.

The ZP REs (e.g., according to the method and/or a device aspect) may comprise at least one of ZP CSI resources for the IM, optionally defining the set of ZP REs and muted or unallocated REs of a physical downlink channel of the network node, optionally of a physical downlink shared channel (PDSCH).

The ZP CSI resources may also be referred to as ZP CSI REs or a ZP CSI RS.

The at least one IM symbol may further comprise ZP REs that are not allocated for the IM at the radio device, e.g., ZP RE that are unallocated REs of the PDSCH.

The at least one IM symbol (e.g., according to the method and/or a device aspect) may be periodically transmitted and/or the at least one CSI report is periodically received.

The network node (e.g., according to the method and/or a device aspect) may determine at least one of subcarriers allocated to the ZP REs in the at least one IM symbol; and a number of the ZP REs in the at least one IM symbol.

The network node (e.g., according to the method and/or a device aspect) may determine at least one of subcarriers allocated to the NZP REs in the at least one IM symbol; a number of the NZP REs in the at least one IM symbol; and a power spectral density of the NZP REs in the at least one IM symbol.

The network node may determine a number of consecutive OFDM symbols for the at least one IM symbol and/or a configuration of (e.g., simply) connected REs in a grid spanned by subcarriers and OFDM symbols (also referred to as time-frequency grid) for the set of ZP REs.

As to a device aspect of the technique, a network node for controlling a distortion for an interference measurement (IM) by controlling a power in a radio transmission of orthogonal frequency-division multiplexing (OFDM) symbols from the network node to a radio device is provided. The network node is configured to transmit, from the network node to the radio device, at least one IM symbol out of the OFDM symbols. The at least one IM symbol comprises zero power resource elements (ZP REs), and zero or more non-zero power resource elements (NZP REs). A set of the ZP REs is allocated to the IM at the radio device. The power in subcarriers outside of the set and in each of the at least one IM symbol is less than or equal to a power in the subcarriers outside of the set and in another symbol out of the OFDM symbols other than the at least one IM symbol. The network node is further configured to receive at least one channel state information (CSI) report from the radio device. The CSI report is indicative of a result of the IM based on the transmitted at least one IM symbol.

The network node (e.g., according to the device aspect) may further be configured to perform any one of the steps the method aspect.

As to a further device aspect of the technique, a base station for controlling a distortion by controlling a power for an interference measurement (IM) in a radio transmission of orthogonal frequency-division multiplexing (OFDM) symbols from the base station to a user equipment (UE) is provided. The base station is configured to communicate with the UE. The base station comprises a radio interface and processing circuitry configured to transmit, from the base station to the radio device, at least one IM symbol out of the OFDM symbols. The at least one IM symbol comprises zero power resource elements (ZP REs), and zero or more non-zero power resource elements (NZP REs). A set of the ZP REs is allocated to the IM at the radio device. The power in subcarriers outside of the set and in each of the at least one IM symbol is less than or equal to a power in the subcarriers outside of the set and in another symbol out of the OFDM symbols other than the at least one IM symbol. The base station is further configured to receive at least one channel state information (CSI) report from the radio device. The CSI report is indicative of a result of the IM based on the transmitted at least one IM symbol.

The base station (e.g., according to the further device aspect) may further be configured to perform any one of the steps of the method aspect.

As to a still further device aspect of the technique, a communication system including a host computer is provided. The host computer comprises processing circuitry configured to provide user data (e.g., transmitted in the non-IM symbol). The communication system further comprises processing circuitry configured to forward user data to a cellular radio network or an *ad hoc* radio network for transmission from a network node (e.g., a base station) to a radio device (e.g., a UE). The network node comprises a radio interface and processing circuitry, the processing circuitry of the network node being configured to execute any of the steps of the method aspect.

The communication system (e.g., according to the still further device aspect) may further include the radio device.

Alternatively or in addition, the radio network (e.g., according to the still further device aspect) may further comprise a base station (e.g., a network node), or a radio device functioning as a gateway, which is configured to communicate with the UE (e.g., another radio device) and/or embodies the network node. The base station, or the radio device functioning as a gateway, may comprise processing circuitry, which is configured to execute the any one of the steps of the method aspect.

The processing circuitry of the host computer (e.g., according to the still further device aspect) may be configured to execute a host application, thereby providing the user data. The processing circuitry of the network node (e.g., according to a still further device aspect) may be configured to execute a client application associated with the host application.

Without limitation, for example in a 3GPP implementation, any "radio device" may be a user equipment (UE).

The technique may be applied in the context of 3GPP New Radio (NR).

The RAN may comprise one or more base stations, e.g., each performing the method aspect. Alternatively or in addition, the radio network may be a vehicular, *ad hoc* and/or mesh network comprising two or more radio devices, e.g., acting as a remote radio device, a relay radio device, and/or a further remote radio device.

Any of the radio devices may be a 3GPP user equipment (UE) or a Wi-Fi station (STA). The radio device may be a mobile or portable station, a device for machinetype communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-IoT device include robots, sensors and/or actuators, e.g., in manufacturing, automotive communication and home automation. The MTC device or the NB-loT device may be implemented in a manufacturing plant, household appliances and consumer electronics.

Whenever referring to the RAN, the RAN may be implemented by one or more network nodes (e.g., base stations).

The radio device may be wirelessly connected or connectable (e.g., according to a radio resource control, RRC, state or active mode) with the network node.

The network node may encompass any station (e.g., a base station) that is configured to provide radio access to any of the radio devices. The network node may also be referred to as cell, transmission and reception point (TRP), radio access node or access point (AP). The network node and/or the radio device may provide a data link to a host computer providing the user data to the remote radio device or gathering user data from the remote radio device. Examples for the base stations may include a 3G base station or Node B (NB), 4G base station (gNB) or eNodeB (eNB), a 5G base station or gNodeB (gNB), a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer, a packet data convergence protocol (PDCP) layer, and/or a Radio Resource Control (RRC) layer of a protocol stack for the radio communication.

Herein, referring to a protocol of a layer may also refer to the corresponding layer in the protocol stack. *Vice versa,* referring to a layer of the protocol stack may also refer to the corresponding protocol of the layer. Any protocol may be implemented by a corresponding method.

Any one of the network node (e.g., gNB), the radio device (e.g., UE), the communication system or any node or station for embodying the technique may further include any feature disclosed in the context of the method aspect, and *vice versa.* Particularly, any one of the units and modules disclosed herein may be configured to perform or initiate one or more of the steps of the method aspect.

### Brief Description of the Drawings

Further details of embodiments of the technique are described with reference to the enclosed drawings, wherein:
- Fig. 1: shows a schematic block diagram of an embodiment of a device for controlling a distortion by controlling a power for an interference measurement in a radio transmission;
- Fig. 2: shows a flowchart of an embodiment of a method of controlling a distortion by controlling a power for an interference measurement in a radio transmission, which method may be implementable by the device of Fig. 1;
- Fig. 3: schematically illustrates a first example of a radio network comprising an embodiment of the device of Fig. 1 performing the method of Fig. 2;
- Fig. 4: schematically illustrates a first reference example of a physical resource block comprising at least one OFDM symbol associated with a CSI-IM;
- Fig. 5: schematically illustrates a second reference example of physical resource blocks comprising at least one OFDM symbol associated with a CSI-IM;
- Fig. 6: schematically illustrates an example of a varying output power in terms of the input power of a power amplifier;
- Fig. 7: schematically illustrates an example of a varying output power in terms of the input power of a power amplifier, and exemplary distributions of scaled input power;
- Fig. 8: schematically illustrates an example of a varying distortion level in terms of error vector magnitude depending on power back-off;
- Fig. 9: shows a data rate as a function of a channel quality resulting from a link level simulation of the radio transmission using a PAPR reduction, wherein the power of the IM symbol may be fixedly reduced according to an embodiment;
- Fig. 10: shows a data rate as a function of a channel quality resulting from a link level simulation of a transmission using a PAPR reduction, wherein the power of the IM symbol may be controlled based on the reported channel quality according to an embodiment;
- Fig. 11: shows a flowchart of an embodiment of a method of controlling a distortion by controlling a power for an interference measurement in a radio transmission, which method may be implementable by the device of Fig. 1 or may be an implementation of the method of Fig. 2;
- Figs. 12A to 12C: schematically illustrate first examples of controlling a reduced power of an IM symbol, which may be used in any of the embodiments;
- Figs. 13A to 13C: schematically illustrate second examples of controlling a reduced power of an IM symbol, which may be used in any of the embodiments;
- Fig. 14: shows a schematic block diagram of a network node embodying the device of Fig. 1;
- Fig. 15: schematically illustrates an example telecommunication network connected via an intermediate network to a host computer;
- Fig. 16: schematically illustrates an example telecommunication network connected via an intermediate network to a host computer; and
- Figs. 17: and 18 show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

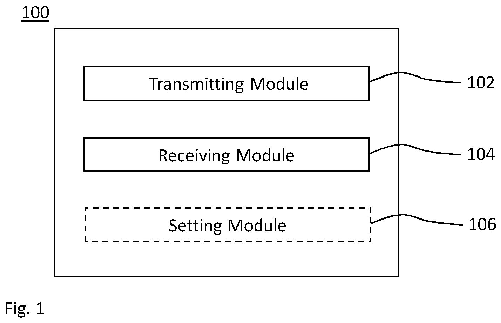

Fig. 1 schematically illustrates a block diagram of an embodiment of a device for controlling a distortion for an interference measurement (IM) by controlling a power in a radio transmission of orthogonal frequency-division multiplexing (OFDM) symbols from a network node to a radio device, e.g., according to the device aspect. The device is generally referred to by reference sign 100.

The device 100 comprises a transmitting module 102 that transmits at least one interference measurement (IM) symbol out of the OFDM symbols from the network node 100 to the radio device. The at least one IM symbol comprises zero power resource elements (ZP REs), and zero or more non-zero power resource elements (NZP REs). A set of the ZP REs is allocated to the IM at the radio device. The power in subcarriers outside of the set and in each of the at least one IM symbol is less than or equal to a power in the subcarriers outside of the set and in another symbol out of the OFDM symbols other than the at least one IM symbol.

The transmitting module 102 may further transmit non-IM symbols other than the at least one IM symbol. For example, a physical downlink control channel (PDCCH) or a physical downlink shared channel (PDSCH) comprising user data may be mapped to the non-IM symbols.

The device 100 further comprises a receiving module 104 that receives channel state information (CSI), e.g., at least one CSI report, from the radio device. The CSI (e.g., the CSI report) may be indicative of a result of the IM based on the transmitted at least one IM symbol.

Optionally, the device 100 further comprises a setting module 106. The setting module 106 is able to set a power of at least one OFDM symbol out of the OFDM symbols, e.g., of the at least one IM symbol and/or of non-IM symbols. The set power may depend on the received at least one CSI report. For example, the reduced power of the at least one IM symbol and/or the set power of the non-IM symbols may be changed in response to the received at least one CSI report.

Any of the modules of the device 100 may be implemented by units configured to provide the corresponding functionality.

The device 100 may also be referred to as, or may be embodied by, the network node (or briefly: NN), e.g. a base station (or briefly: BS). The radio device may be embodied by below radio device 120, e.g., a user equipment (UE).

Alternatively or in addition, the network node 100 and the radio device may be in direct radio communication, e.g., at least when the network node transmits the at least one IM symbol from the network node to the radio device.

Herein, any radio device may be a mobile or portable station and/or any radio device wirelessly connectable to a base station or RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection.

Furthermore, any network node (e.g., a base station) may be a station providing radio access, may be part of a radio access network (RAN) and/or may be a node connected to the RAN for controlling the radio access. For example, the network node may be an access point, for example a Wi-Fi access point.

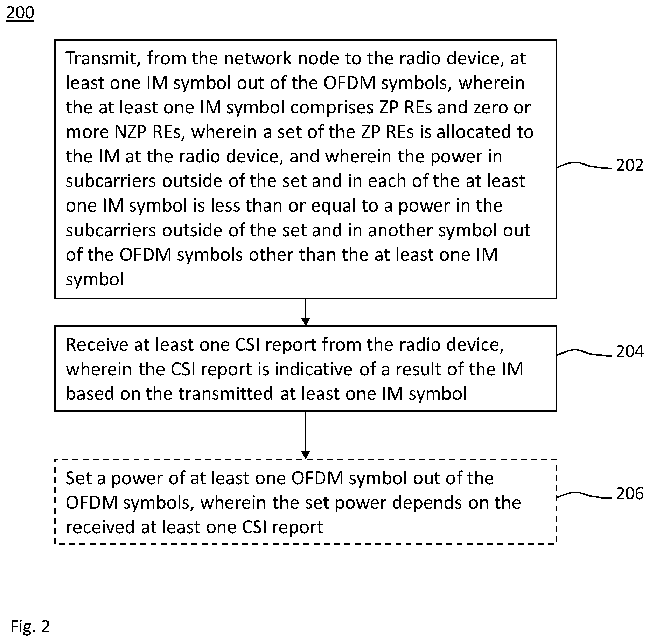

Fig. 2 shows an example flowchart of an embodiment of a method 200 of controlling a distortion for an interference measurement (IM) by controlling a power in a radio transmission of OFDM symbols from a network node to a radio device, e.g., according to the method aspect. The method 200 may be implementable by the device of Fig. 1 (e.g., the network node 100).

In a step 202 of the method 200, the network node 100 transmits at least one IM symbol to the radio device. The at least one IM symbol comprises zero power resource elements (ZP REs), and zero or more non-zero power resource elements (NZP REs). A set of the ZP REs is allocated to the IM at the radio device. The power in subcarriers outside of the set and in each of the at least one IM symbol is less than or equal to a power in the subcarriers outside of the set and in another symbol out of the OFDM symbols other than the at least one IM symbol.

In a step 204 of the method 200, the network node 100 receives at least one CSI report from the radio device. The at least one CSI report is indicative of a result of the IM based on the at least one IM symbol transmitted in the step 202.

Optionally, the method 200 further comprises a step 206 in which the network node 100 may set a power of at least one OFDM symbol out of the OFDM symbols. E.g., the network node 100 may set the symbol power of a further IM symbol and/or may set the symbol power of a non-IM symbol used for data transmission to the radio device. The set power may depend on the received at least one CSI report.

Herein, whenever referring to noise or a signal-to-noise ratio (SNR), a corresponding step, feature or effect is also disclosed for noise and/or interference or a signal-to-interference-and-noise ratio (SINR).

While the technique is described primarily for a downlink (DL) from the network node to the radio device, the technique may also be applied to an uplink (UL), wherein the network node is a mobile terminal and the radio device is a base station. Alternatively or in addition, the technique may also be applied to a direct communications between radio devices, e.g., device-to-device (D2D) communications or sidelink (SL) communications, wherein the network node is a mobile terminal.

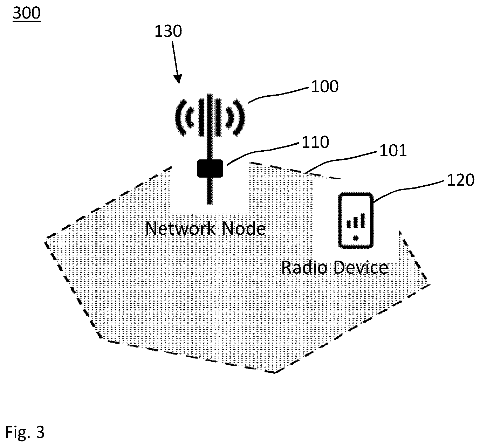

Fig. 3 schematically illustrates a wireless communication system 300 comprising a radio access network (RAN) 130. The RAN 130 comprises at least one network node 100 (e.g., a base station). Each network node 100 provides radio access to one or more radio devices 120 in at least one cell 101.

The radio device 120 may be located in the cell 101 of the network node 100, e.g., either in a central area of the cell 101 or close to an edge of the cell 101.

The network node 100 may comprise a transmit processing chain, including a power amplifier (PA) 110. The PA 110 may be integrated in the network node 100 or modularly connected to the network node 100. The PA 110 or the transmit processing chain may further comprise a module for setting the power (e.g., a setting module) and a module for reducing the peaks of input signal power (e.g., a PAPR reduction module).

The PA 110 may amplify the OFDM signals transmitted to (or received from) the radio device 120. The PA 110 may be any kind of power amplifier (e.g., bidirectional power amplifier).

The PA 110 may amplify a radio frequency signal, e.g., a result of up-converting the baseband signal. Therefore, the PA 110 may be referred to as a radio frequency PA.

The PA 110 is a key component, and its requirements or capabilities have a large impact on power consumption, size, and weight of the network node (NN) 100 (e.g., base station, BS) in the RAN 130.

By reducing the power of the at least one IM symbol, embodiments of the network node 100 can ensure that the CSI report fed back from the one or more radio devices to the network node 100 (i.e., received at the network node 100 in the step 204) is based on an IM that is not dominated by the distortion caused by the network node 100. The network node 100 may reduce the power of the at least one IM symbol according to the step 202 by configuring CSI REs (e.g., a ZP CSI RS in the set of ZP REs and/or a NZP CSI RS in the NZP REs) and/or by scheduling the remaining REs (e.g., the REs outside of the set of IM REs).

As a result of the step 202, the at least one CSI report received in the step 204 can be used to set the power (e.g., the power back-off and/or the reduced power) in the step 206. The set power (e.g., the reduced power or the power back-off) may be changed (i.e., adjusted) based on at least one of noise (N), interference (I), and channel conditions reported in the CSI report from the radio device.

For example, a radio device 120 located near the edge of the cell 101 (e.g., relatively far from the network node 100 or at the edge of cell coverage) may be limited by noise and/or interference (e.g., inter-cell interference). For the radio device 120 located near the edge of the cell 101, for a future transmission of data on PDSCH mapped to an IM symbol or a non-IM symbols it is preferable that no power back-off may be applied (e.g., the power of the IM symbols and/or non-IM symbol may be the nominal power) or the power back-off may be less compared to a radio device not limited by inter-cell interference or noise (e.g., the reduced power of the IM symbol and/or non-IM symbol may be greater compared to a radio device not limited by inter-cell interference or noise) based on the CSI report received in the step 204. Thus, the radio device 120 located near the edge of the cell 101 may have a higher power efficiency and data rates as compared to using a greater power back-off.

As another example, radio devices 120 that are in a central area of the cell 101 or not limited by inter-cell interference or noise may use a power back-off that is greater compared to a radio device limited by inter-cell interference or noise. For example, the reduced power of the IM or the non IM symbol used for PDSCH data transmission may be less compared to a radio device at the edge of the cell 101 or limited by inter-cell interference or noise. Accordingly, the radio devices 120 are not limited by distortions introduced at the network node 100, e.g. by CFR and/or the PA 110. This means that high or peak data rates can be offered (e.g., scheduled) by the network node 100 for these radio devices 120.

Consequently, embodiments of the network node 100 can improve its power efficiency and/or increase its coverage area by reducing the PAPR (e.g., at the edge of the cell 101) while still being able to offer high or peak data rates within the coverage area of the cell 101 (e.g., in the central area of the cell 101). Or, put another way, the network node 100 can offer high data rates for radio devices 120 within its cell without penalizing performance for radio devices 120 at the edge of the cell.

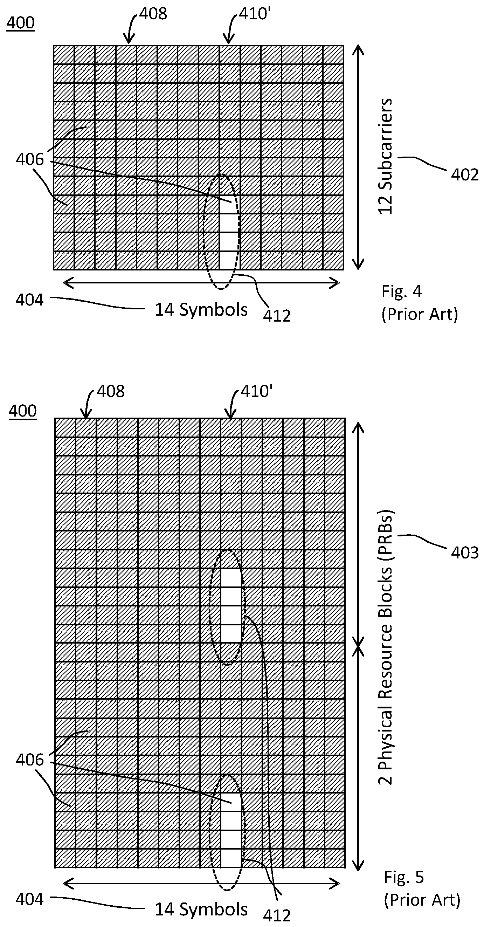

Fig. 4 schematically illustrates a grid of resource elements (REs) 406 in the frequency domain, e.g., measured in subcarriers 402, and in the time domain, e.g., measured in orthogonal frequency-division multiplexing (OFDM) symbols 404.

Furthermore, Fig. 4 schematically illustrates an example of a resource block (RB, e.g., a physical resource block, PRB) of a slot. The PRB comprises 12 subcarriers 402 in the frequency domain and slot comprises 14 OFDM symbols 404 in the time domain. The smallest addressable unit in 4G and 5G systems using OFDM is one subcarrier 402 in one OFDM symbol 404, and this combination is referred to as one RE 406.

Each of the REs 406 may be allocated to a certain physical downlink channel (e.g., a physical downlink control channel, PDCCH, or a physical downlink shared channel, PDSCH) and/or a reference signal (RS), e.g., a zero-power RS (ZP-RS) for the IM, a channel state information RS (CSI-RS) or a demodulation RS (DM-RS) according to a radio access technologies (RAT) such as 3GPP LTE or 3GPP NR. The ZP-RS may be considered as a special case of the CSI-RS for the CSI-IM (which is also referred to as ZP-CSI-RS).

The PRB comprises a conventional IM symbol 410'. The IM symbol (which is herein referred to by reference sign 410) as well as the conventional IM symbol 410' is an OFDM symbol that is associated with the IM (e.g., the CSI-IM). That is, the IM symbol 410 as well as the conventional IM symbol 410' comprises REs 412 associated with or allocated for the IM (e.g., the CSI-IM) at the radio device 120. The REs 412 associated with the IM are briefly referred to as IM REs 412 or, collectively, as the set 412 of the ZP REs allocated to the IM. The ZP-RS (e.g., a ZP-CSI-RS) may correspond to a set of the IM REs 412.

The IM symbol 410 differs from the conventional IM symbol 410' in that the power in subcarriers 402 outside of the set 412 and in each of the at least one IM symbol 410 is less than or equal to a power in the subcarriers 402 outside of the set 412 and in the conventional IM symbol 410' or any one of the non-IM symbols 408. Therefore, the symbol power of the IM symbol 410 is referred to as the reduced power.

The non-IM symbol 408 is an OFDM symbol 404 that is not associated with the IM, i.e., an OFDM symbol 404 that does not comprise REs 412 allocated for the IM (or IM REs 412).

The scheduling and link adaptation functionalities between network node 100 and radio device 120 require knowledge about the (e.g., approximate) instantaneous channel condition. Such knowledge is referred to as channel state information (CSI) and the radio device 120 may determine CSI by performing measurements on so called CSI reference signals (CSI-RS) which are transmitted in the downlink.

The CSI-RS resources are multiplexed on the time-frequency grid with other transmission such as data transmission on the physical downlink shared channel (PDSCH) and its associated demodulation reference signals (DM-RS).

In 3GPP NR, the network node 100 instructs the radio device 120 to measure the channel state on a certain set of CSI-RSs, and each CSI-RS is mapped to a set of REs which the network node 100 uses for transmission of the respective reference signals (RSs).

The REs of the CSI-RS are multiplexed on the time-frequency grid with data transmission on the physical downlink shared channel (PDSCH) and there are different types of CSI-RSs. A first type of CSI-RSs comprises nonzero-power CSI-RS (NZP-CSI-RS), which are used to measure a gain of the channel (e.g., including amplitude gain and phase for each port-antenna pair). In these REs, the network node 100 will transmit RSs, i.e. a sequence of symbols known by both transmitter (e.g., the network node 100) and receiver (e.g., the radio device 120). The NZP-CSI-RS has typically not been altered by the transmitter (e.g., through a precoding filter).

A second type of CSI-RSs (e.g., CSI-RS resources) comprises zero-power CSI resources (ZP CSI resources, also referred to as: ZP CSI-RS resources or ZP CSI-RS) to perform the IM (e.g., the CSI-IM) at the radio device 120. The CSI-IM may be used to estimate an interference level and/or a noise level and/or any impairments at the radio device 120. The ZP CSI-RS may be allocated to ZP REs. Herein, any OFDM symbols 404 comprising the ZP CSI-RS may be referred to as the at least one IM symbol 410.

The CSI-IM is associated with a set of IM REs 412. These IM REs 412 are used primarily to measure the interference (i.e., for the IM). The set of IM REs may comprise four adjacent REs 404 (e.g., in each PRB over the bandwidth within) in one OFDM symbol. The latter arrangement of IM REs 412 is symbolically referred to by "4×1". Other arrangements include two subcarriers 402 and two neighboring IM symbols 402 comprising the set of IM REs 412, which arrangement is symbolically referred to as "2×2".

Fig. 4 schematically illustrates a single PRB comprising the IM REs 412. Alternatively, each PRB over the bandwidth (e.g., within one IM symbol 410) comprises the set of IM REs 412, e.g., as schematically illustrated in Fig. 5 for two PRBs 403.

Fig. 5 schematically illustrates an example of two physical resource blocks (PRB) 403 of a slot. In NR, a set of REs 406 over twelve adjacent subcarriers 402 is referred to as physical resource block (PRB) 403. Fourteen adjacent OFDM symbols 404 constitute a slot. Fig. 5 schematically illustrates an example of multiple PRBs comprising one IM symbol 410, e.g. over the bandwidth of the radio device 120.

The serving network node 100 typically transmits nothing, i.e. the subcarriers are blanked and/or empty and/or muted (e.g., except for the spurious distortion level). This is realized by configuring a zero power CSI-RS (ZP-CSI-RS), which is indicative to the radio device 120 that a PDSCH is not mapped to those REs, i.e. the set of IM REs 412. Typically, network nodes serving neighboring cells (e.g., neighboring network node of the network node 100) use the IM REs 412 in a way that corresponds to normal activity thereby allowing the radio device 120 to measure a reliable estimate of the interference from other cells, which is also referred to as inter-cell interference.

Herein, the IM REs 412 in an OFDM symbol associated with IM (i.e., in the IM symbol 410) may synonymously be referred to as zero power CSI-RS (ZP-CSI-RS) or ZP REs.

The REs 406 in the at least one IM symbol 410 and/or the non-IM symbol 408 (i.e., any OFDM symbol 404 other than the at least one IM symbol 410) may have a symbol power (e.g., a power spectral density or spectral power) from zero power to a nominal power (e.g., a maximum power).

For simplicity, Figs. 4 and 5 show an arbitrary one of the one or more non-IM symbols 408 that are not associated with the IM, i.e., OFDM symbols 404 other than the IM symbol 410. For example, while Figs. 4 and 5 only show one non-IM symbol 408, the non-IM symbol power may be based on a plurality of non-IM symbols 408 (e.g., by computing the average over a plurality of non-IM OFDM symbols 408). Alternatively or in addition, while the non-IM OFDM symbol 408 is illustrated within the same slot comprising the IM symbol 410 and/or prior to the IM symbol 410, the scheduling hypothesis (e.g., for a data transmission from the network node 100 to the radio device 120) may use at least one non-IM symbol 408 (e.g., at the same temporal position relative to the PRB 413) in another PRB 413 after the PRB 413 comprising the IM symbol 410.

For brevity and not limitation, the radio device 120 is below referred to as UE 120.

The at least one CSI report may be indicative of the channel quality, e.g., based on or including at least one of channel estimates, measurements of noise and/or interference, rank indicator (RI), precoding matrix indicator (PMI), and/or channel quality indicator (CQI) as indicators of the channel quality. The RI, PMI and/or CQI may be generated based on the channel estimates, the measurements of noise and/or interference. The NZP CSI RSs (or briefly: CSI-RSs) may be used for channel estimates. Alternatively or in addition, the CSI-IM in the IM REs 412 may be used for the measurements of noise and/or interference.

Alternatively or in addition, for evaluating the channel quality at the UE 120, any embodiment may use any one of several channel indicators defined by the 3rd Generation Partnership Project (3GPP). This includes at least one of the following indicators, which may be accessible at an application layer of the UE 120.

A first indicator is a Reference Signal Received Power (RSRP). The RSRP describes the average power of the resource elements (REs) that carry RSs (e.g., cell-specific RSs, CRSs) within the considered measurement frequency bandwidth. These RSs may be transmitted by the network node 100 with a constant power. Optionally, the RSs are independent of the activity of the UE 120. Hence, only the position of the UE 120 influences this indicator.

A second indicator is a Received Signal Strength Indicator (RSSI). The value of the RSSI characterizes the total reception power in the used telecommunication spectrum. This includes the desired signal (S) of all UEs in a cell, (e.g., thermal) noise (N) and interferences (I): $RSSI = S + N + I .$

A third indicator is a Reference Signal Received Quality (RSRQ). The RSRQ describes the relationship between RSRP, RSSI and the number of PRBs (NPRB) for measuring the RSSI: $RSRQ = 10 ⋅ {log}_{10} \left(NPRB\right) + RSRP - RSSI .$

The RSSI and the RSRQ are influenced by all three main factor for the connectivity including the position of the UE, the interference situation and the data traffic produced by UEs in the same cell.

RATs using OFDM, such as a 4G RAT or the 3GPP LTE, or a 5G RAT or 3GPP NR, share the available channel bandwidth between multiple UEs 120. This can be done by multiplexing UEs 120 in time and frequency utilizing different time slots (e.g., comprising 7 or 14 OFDM symbols 404) and subcarriers 402. The smallest addressable unit is one subcarrier 402 in one OFDM symbol 404, and this is referred to as resource element (RE) 406. A set of REs 406 over twelve adjacent subcarriers 402 is referred to as physical resource block (PRB) 403. Multiplexing in time is done using time slots, where each time slot comprises up to 14 adjacent OFDM symbols 402.

Any embodiment of the network node 100 may perform at least one of dynamic scheduling and link adaptation (e.g., including coding and/or modulation scheme) for the UE 120 based on the CSI report derived from the IM and received from the UE 120, which is briefly referred to as scheduling and link adaptation functionalities.

Dynamic scheduling and link adaptation are used to take instantaneous traffic demands and/or channel conditions into account, e.g. with an update rate equal slot level (e.g., equal to or less than 1 ms). This means that UEs 120 with high signal to interference and noise ratio (SINR) may use several multiple-input-multiple-output (MIMO) layers and/or modulation and coding schemes with high modulation orders (e.g., 256-QAM) and high code rates (up to 0.95), whereas a UE 120 at low SINR may use a single layer with a Quadrature Phase Shift Keying (QPSK) and low code rate (e.g., 0.1).

In the absence of distortions caused by non-linearities, sources of interference include downlink transmissions by neighboring base stations (i.e., inter-cell interference) or even from the serving base station in the case of multiple-use MIMO (MU-MIMO) (i.e., intra-cell interference). Furthermore, there is a varying distortion level caused by a non-linearity in the transmit processing chain (i.e., in the signal processing) at the network node 100 (e.g., in the transmit processing chain) when power of one RE 406 spreads into other REs 406 due to the non-linearity (i.e., non-linear operations).

The distortion level introduced by non-linear operations at the network node 100 contributes to the interference measured at the UE 120. Examples of non-linear operations comprise at least one of a peak to average power ratio (PAPR) reduction, e.g. a crest factor reduction (CFR) (such as clipping), and a non-linearity of a power amplifier (PA), e.g., due to heating up of a transmit processing chain.

To be able to achieve (e.g. very) high peak data rates (at least in the cell center and/or at low network load when there is little inter-cell interference), the maximum average power must be allocated. However, since the non-linear distortions (i.e., the varying distortion level due to a non-linearity) increase with the symbol power (e.g., transmission power), it is required that they are kept adequately low, e.g. up to 3.5%, for This in turn drives a requirement for a relatively high PAPR, e.g. around at least 7.5 dB. One way to achieve this is to reduce, or back-off, the signal power.

Any embodiment of the network node 100 may use dynamic scheduling and/or link adaptation to take instantaneous traffic demands and/or channel conditions into account, e.g. with an update rate equal to the slot rate (e.g. equal to or less than 1 ms). This means that a UE 120 with high signal to interference and noise ratio (SINR) can use (i.e., may be controlled by the network node 100 to use) several multiple-input-multiple-output (MIMO) layers and/or modulation and coding schemes with high modulation (e.g., quadrature amplitude modulation (QAM) orders such as 64QAM or 256QAM) and/or high code rates (e.g., up to 0.9 or 0.95 or higher). A UE 120at low SINR may use (i.e., may be controlled by the network node 100 to use) a single layer with quadrature phase shift keying (QPSK) and low code rate (e.g., 0.1 or less).

For OFDM, data is transmitted in parallel on many subcarriers 402. This may be implemented using OFDM symbols 404 (in the frequency domain) and generating a time domain sequence through an inverse fast Fourier transformation (IFFT). An advantage of ODFM is its robustness to multipath propagation, but a disadvantage is a relatively high peak-power to average-power ratio (PAPR).

The PAPR may be the relation between a maximum power (e.g., of a sample) in a given OFDM symbol 402 divided by the average power of the respective OFDM symbol 402. In other words, the PAPR may be the ratio of peak power to average power of a signal.

For brevity and not limitation, the network node 100 may below be referred to as gNB 100.

The gNB 100 may configure the UE 120 to report the CSI (i.e., in the at least one CSI report) back to the gNB 100. Such a CSI report may comprise or may be indicative of one or more of the following: a rank indicator (RI), a precoding matrix indicator (PMI), and channel quality indicator (CQI). The CQI can be viewed as a quantization of the SINR that is obtained conditioned on the reported number of layers as indicated by the RI and the precoding weights as indicated by the PMI. The CSI report is obtained (i.e., derived) by the UE 120 with the combination of at least one channel measurement (e.g., from NZP-CSI-RS) and the at least one IM, e.g. the CSI-IM, in the IM REs 412.

At the gNB 100, there may be a delay of several slots between measurement (i.e., when the IM symbol 410 is transmitted from the gNB 100 to the UE 120) and the CSI report and/or a further delay due to the gNB 100 processing for demodulation of the CSI report and (link) adaptation of the subsequent transmissions (e.g., including the transmission of the non-IM OFDM symbol 408 in a subsequent or later PRB 403). Alternatively or in addition, the gNB 100 may, based on the received at least one CSI report, determine which UE 120 to schedule and which transmission parameters to select, e.g., comprising at least one of bandwidth, number of layers, precoding, transmit power, modulation order and channel coding rate.

The gNB 100 may determine a combination of a CSI-IM (i.e., IM RE 412) and NZP-CSI-RS (e.g., other RE 406 in the IM symbol 410) as a hypothesis of a future scheduling by the gNB 100. It is desirable that the combination of measured channel (e.g., the channel gain as measured on NZP CSI-RS) and the measured interference (as measured in the CSI-IM on the IM RE 412) be similar to the measured channel and measured interference, respectively, when the next (or a future) data transmission is scheduled, e.g. because then the associated CSI or the transmission parameter derived from the CSI will be sufficiently close to the optimal transmission parameters.

In any embodiment, the gNB 100 may configure the UE 120 with a combination of multiple NZP-CSI-RSs and /or multiple CSI-IMs (i.e., multiple sets of IM RE 412 for multiple IMs) and/or with multiple (e.g., CSI) reports.

In any embodiment of the gNB 100, the UE 120 may be triggered and/or configured by the gNB 100 to measure interference levels (i.e., to perform the IM) for CSI reporting (i.e., for the gNB 100 to receive a CSI report from the UE 120) on specific REs referred to as IM REs 412, i.e., combinations of OFDM symbols 402 and subcarrier 404) assigned by the gNB 100. These are typically blanked (i.e., left empty) by the gNB 100 (e.g., except for the varying distortion level).

In any embodiment, the varying distortion level caused by the gNB 100 may depend on the symbol power (e.g., an output power used by the gNB 100). More specifically, the varying distortion level may be greater if the symbol power (e.g., output power) is greater (i.e., the function relating symbol power and varying distortion level may be (e.g., strictly) monotonic.

In any embodiment, the instantaneous symbol power, i.e., the power per OFDM symbol (e.g., the power of an OFDM symbol in the digital domain or the output power of an OFDM symbol) may vary across slots (e.g., due to a varying load of the PDSCH and/or the PDCCH) and/or across OFDM symbols 404 (e.g., due to blanked resources such as the IM RE 412).

In any embodiment, the at least one CSI report received from the UE 120 may be used by the gNB 100 for link adaptation and/or scheduling. The accurate CSI reports enable an efficient operation of the wireless communication system 300.

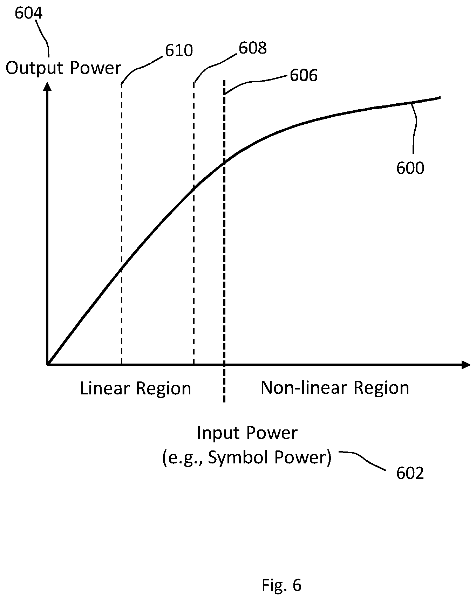

Fig. 6 schematically illustrates the output power 604 as a function 600 of the input power 602 of a power amplifier (PA) 110. The input power 602 of the PA 110 may be a symbol power (e.g., the total power) of an OFDM symbol 404 (e.g., the non-IM symbol 408 and/or the IM-symbol 410). Alternatively or in addition, the input power 602 of the PA 110 may be the power per RE (i.e., the symbol power divided by the number of REs in the OFDM symbol).

The input power 602 may be an average power over a plurality of OFDM symbols (e.g., in a slot) or instantaneous power of an OFDM symbol 404.

To understand some of the fundamental tradeoffs, the input-output power characteristics of a PA 110 plays an important role. The input power 602 can be divided into two regions, the linear region in which the output power 604 is approximately proportional to the input power, and the non-linear region in which the output power 604 saturates and it is not proportional to the input power 602 anymore, see Fig. 6.

The vertical line 606 in Fig. 6 schematically illustrates the nominal power as a reference value for the symbol power. In a first example, the nominal power may be a maximum power (e.g., of the power amplifier). In a second example, the nominal power may correspond to a clipping threshold of the PAPR reduction unit. In a third example, the nominal power may correspond to a maximum power of a single RE 406 (i.e., a single tone in the OFDM symbol) multiplied by the number of subcarriers 402 (e.g., in the bandwidth of the UE 120).

In case of the input power 602 of a PA 110 is less than the power 606, the output power 604 of the PA 110 is proportional to the input power 602, or in another word the PA 110 is working in its own linear region. In another case, the input power 602 of the PA 110 is higher than the power 606 and the PA 110 is working in its own non-linear region, meaning the output power 604 of the PA 110 is not linearly proportional to the input power 602 of the PA 110. In this region the output power 604 for higher input power 602 may be slightly bigger or equal to the maximum output power of the PA 110 working in its own linear region.

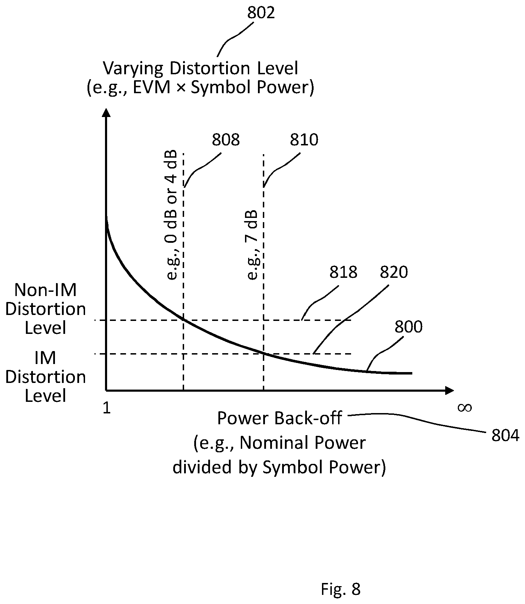

Fig. 6 shows an exemplary value of a non-IM symbol power 608, i.e., the symbol power of the non-IM OFDM symbol 408, e.g., as illustrated in any one of the Figs. 4, 5, 12A, 12B, 12C, 13A, 13B or 13C. The non-IM symbol power 608 may cause a non-IM distortion level 818, e.g., as illustrated in Fig. 8. The non-IM distortion level 818 may be measured as a relative quantity, e.g., a value of the error vector magnitude (EVM).

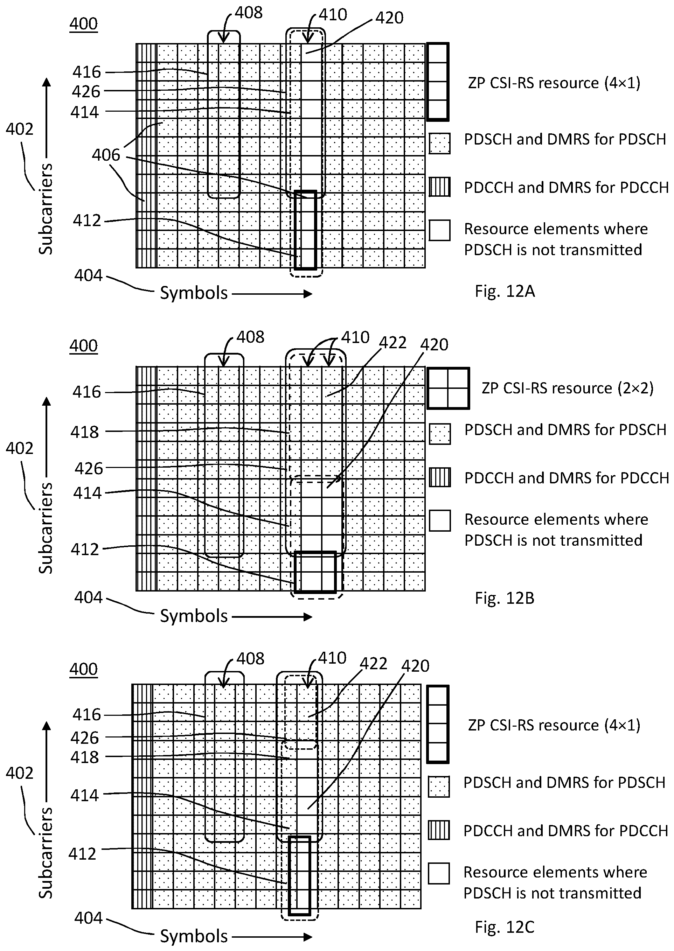

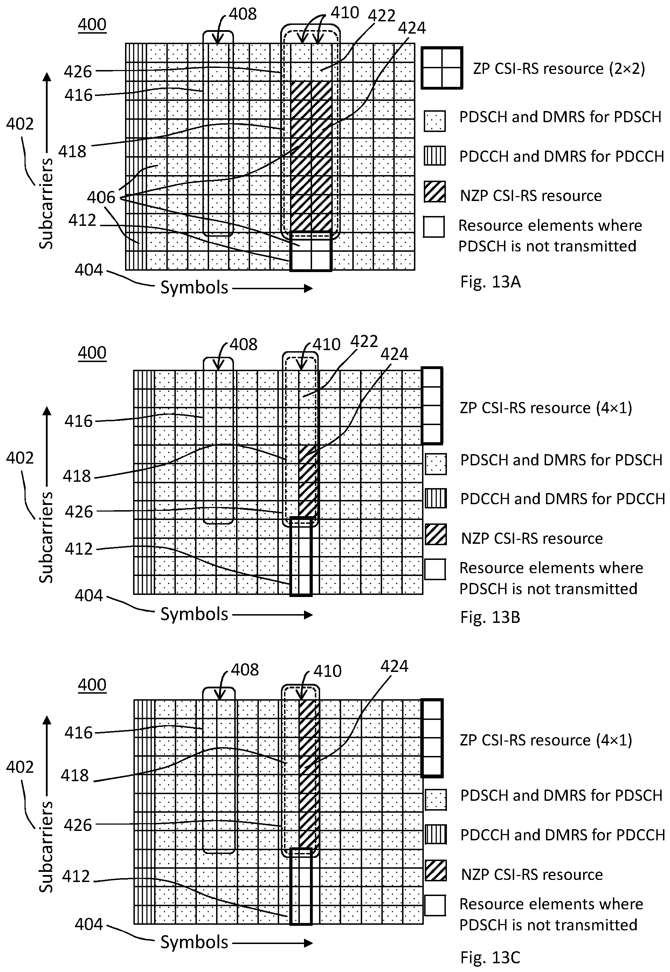

Fig. 6 further shows an exemplary value of an IM symbol power 610 (i.e., the symbol power of the at least one IM symbol 410 according to the step 202, e.g. as illustrated in any one of the Figs. 12A, 12B, 12C, 13A, 13B, and 13C, which may be reduced relative to the conventional IM symbol 410', e.g. as illustrated in any one of Figs. 4 and 5. The IM symbol power 610 may cause an IM distortion level 820, e.g. as illustrated in Fig. 8. The IM distortion level 820 may be measured as a relative quantity, e.g., a value of the error vector magnitude (EVM).

The IM distortion level 820 may be reduced relative to the distortion level of the conventional IM symbol 410' and/or relative to the non-IM distortion level 818.

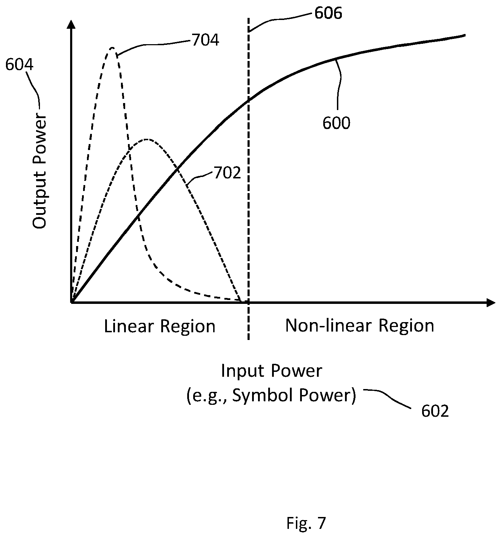

Fig. 7 schematically illustrates an (e.g., instantaneous) power distribution 704 of a high PAPR and an (e.g., instantaneous) power distribution 702 of a low PAPR 702. Both distributions 702 and 704 are scaled to ensure that most of the signal (e.g., the OFDM symbols 404) is within the linear region of the power amplifier (PA).

The input signal 602 (e.g., symbol power) may be scaled to ensure that the PA 110 is operating in its linear region to ensure as little in-and out-of-band distortion of the signal as possible. For example, the signal is scaled such that the peaks of the input signal are within the linear region with very high probability, e.g. approximately 99.999%. In other words, the probability of the signal of an OFDM symbol 404 falling in the non-linear region may be less than 0.0001%, meaning the tail of the signal distribution most probably ends within the linear region. For input signals having a probability distribution 704 with a high PAPR, this means that the average output power will be significantly lower than for signals having a probability distribution 702 with a low PAPR. In addition, the PA 110 efficiency increases close to the non-linear region 606. Thus, for signals with a high PAPR 704, the PA 110 will be less efficient as a large portion of their signal will be low in power, as illustrated for the distribution 704. For signals having a probability distribution 702 with lower PAPR, as a large portion of the signal will have higher power (closer to the 606), the PA 110 will be more efficient.

Wireless communication systems according to the 4G and/or the 5G based on LTE and NR, uses OFDM. The main advantage of OFDM over single-carrier schemes is its ability to cope with severe channel conditions (e.g., attenuation of high frequencies in a long copper wire, narrowband interference and frequency-selective fading due to multipath) without the need for complex equalization filters. Channel equalization is simplified because OFDM may be viewed as using many slowly modulated narrowband signals rather than one rapidly modulated wideband signal. The low symbol rate makes the use of a guard interval between symbols affordable, making it possible to eliminate inter-symbol interference (ISI) and use echoes and time-spreading (in analog television visible as ghosting and blurring, respectively) to achieve a diversity gain, i.e. a signal-to-noise ratio improvement.

Moreover, OFDM enables transmitting data or control signals in parallel on many subcarriers. In practice, this is implemented taking OFDM symbols in the frequency domain and generating a time domain sequence by means of an inverse fast Fourier transformation (IFFT).

An advantage of OFDM waveforms is the inherent robustness to multipath propagation, but a disadvantage might be a relatively high PAPR, meaning less power efficiency for the PA 110.

As the PAPR of OFDM signals 404 is relatively high, the transmit processing chain may comprise a PAPR reduction unit, e.g. implemented by a crest factor reduction (CFR), which is used to reduce the peaks of the input signal. CFR is a technique used to reduce the PAPR of the transmitted signals (e.g., the OFDM symbols 404) so that the PA 110 can operate more efficiently (e.g., close to the nominal power 606 inside the linear region). In practice, there are different CFR algorithms.

By reducing the peaks, the average transmitted power of the signal can be increased for the same PA 110. Thus, the received signal to noise ratio (SNR) will be higher, which enables an improvement in power efficiency of the PA 110. The cost for this improvement in power efficiency is that the varying distortion level 802 (e.g., illustrated in Fig. 8) is introduced or increased at the gNB 100.

The CFR is a technique to reduce the PAPR of a waveform to a desired value. Herein below, for concreteness and not limitation, the function of the PAPR reduction unit is described using CFR.

Alternatively or in conjunction with the CFR, the PAPR reduction unit or another unit may comprise a digital pre-distortion (DPD) that is configured to improve the overall linearization or overall linearity of the gNB 100 or the transmit processing chain of the gNB 100 or the combination of the DPD and the PA of the gNB 100.

Basic techniques for CFR include iterative peak-clipping and filtering (clip-and-filter) and peak cancellation, but there is an abundance of other more sophisticated methods. Alternatively or in addition, more advanced techniques (e.g. applicable to a gNB 100 comprising multiple antennas) include a convex reduction of amplitudes (CRAM). The varying distortion level can remain or result from the PAPR reduction unit, e.g. for conventional techniques operating independently on the signal to each antenna. Alternatively or in addition, the distortions due to clipping lead to inter-carrier interference, and will hence affect also carriers with no data mapped, e.g., the IM REs 412.

However, CFR does also cause signal distortions and therefore there is a trade-off between the varying distortion level created by the CFR and the power efficiency of the PA 110. When a high level of distortion can be tolerated, then the signal power distribution can be brought closer to the region in which the PA 110 is most power efficient (e.g., closer towards the nominal power 606).

Assuming that CFR is used to limit the signal peak power to a certain fixed peak value (e.g., corresponding to the nominal power 606) so that the power amplifier 110 can handle and that this value does not depend on the input signal power to the CFR, then one can control the level of distortions by controlling the average transmit power of input signal to the CFR. If the input power reduces (referred to as power back-off), the output power also reduces and more importantly, the PAPR in the output signal effectively increases which in turn means that less distortions are generated.

Sources of interference may comprise downlink transmissions by neighboring network nodes (e.g., inter-cell interference) or even from the serving network node 100 in the case of MU-MIMO (e.g., intra-cell interference). In addition, distortions introduced by CFR also contributes to the interference, as does other non-linearities in the serving network node transmitter. For the network node 100 to be able to offer (very) high peak data rates (at least in the cell center and/or at low network load when there is little inter-cell interference), the maximum peak power is chosen so that the distortions are adequately low (e.g., around 15%, 7%, 3.5% or less) for corresponding maximum average power. This in turn drives a requirement for a relatively high PAPR (e.g., around 7.5 dB or higher).

The UE 120 (as an example of the radio device) can determine the CSI (i.e., a CSI feedback) that is reported back to the network node 100 in the step 204. The network node 100 uses the at least one CSI report for scheduling and link adaptation, using the channel and interference estimates obtained from the NZP-CSI-RS and the CSI-IM 412, respectively. Such a CSI report may comprise one or more of the following: a rank indicator (RI), a precoding matrix indicator (PMI) and channel quality indicator (CQI). The CQI can be viewed as a quantization of the SINR that is obtained conditioned on the reported number of layers as indicated by the RI and the precoding weights as indicated by the PMI.

In 5G NR, there is a possibility to configure reserved REs in the downlink (DL). These may be configured on a semi-static time scale, wherein the reserved REs may be indicated, e.g., by using two bitmaps. A first bitmap indicates the OFDM symbols that are used for the reserved REs. A second bitmap indicates which one or more PRB in the frequency domain are to be used for the reserved REs. The network node 100 can then dynamically (e.g., slot based, i.e., for an individual slot) or semi-statically (e.g., every 40 slots) control which of the reserved REs that should be used for a physical downlink shared channel (PDSCH) and which should remain reserved, i.e. free from PDSCH.

Fig. 8 schematically illustrates the distortion level 802 as a function 800 of power back-off 804, e.g., nominal power divided by symbol power 604. In other words, Fig. 8 shows a relationship 800 between the power back-off 804 and distortion level 802, e.g. in terms of an error vector magnitude (EVM).

The symbol power 602 (e.g., an OFDM symbol) may be the (e.g., time-averaged) symbol power of the non-IM symbol 408 and/or of the IM symbol 410.

Fig. 8 shows an example of how the distortions 802 (e.g., in terms of EVM) vary based on the power back-off 804 (or equivalently, based on the symbol power 602), optionally assuming that CFR is used to ensure that the PA 110 is operating within its linear region (e.g., below or close to the nominal power 606).

Herein, a power back-off 804 of an OFDM symbol 404 may refer to a ratio between a nominal power and the (e.g., time-averaged) symbol power of a certain type of OFDM symbol, e.g., the IM symbol 410 or the non-IM symbol 408. Alternatively or in addition, the power back-off may refer to a reduction of power at the network node, e.g., relative to the nominal power (e.g., the nominal power 606). The power reduced according to the power back-off may be an input power of a PA 110 at the network node 100 for the radio transmission and/or a symbol power of a baseband signal.

Alternatively or in addition, the symbol power that is set or reduced (e.g., compared to the nominal power 606) according to the power back-off may be an input power of a PAPR reduction unit at the gNB 100 for a radio transmission from the gNB 100 to the radio UE 120. Alternatively or in addition, the symbol power that is set or reduced according to the power back-off may be a symbol power (e.g., an output power) of a baseband signal (e.g., in the digital domain and/or generated by a signal processor of the gNB 100, or in the analog domain and/or generated by a modem) for the radio transmission.

The transmit processing chain, e.g., the PAPR reduction unit and/or the PA 110, may be a source of distortion in the signal (e.g., in the baseband signal or is radio frequency signal). When the PA 110 is working in a non-linear region (or close to non-linear region), it causes a distortion in the bandwidth used by the respective UE 120 (in-band distortion) or even outside of its bandwidth (out-of-band distortion). When input power 602 is close to non-linear region 606, the PA 110 is working most efficiently.

Distortions are commonly quantified in terms of EVM in percent. Fig. 8 illustrates how the EVM of the distortions 602 (e.g., per antenna varies) with the power back-off 804 of input signal (e.g., the baseband signal). The power back-off 804 in a PA 110 can be understood as a power level below a saturation point (e.g., at the reference sign 606) at which the PA 110 will continue to operate in the linear region even if there is a slight increase in the input power level. Even though there are also other imperfections in the radio signal path, such as phase noise, the CFR is often the dominating source of the distortions and this a reason for why the EVM can be reduced by reducing the transmit power.

The higher the power back-off 804 the lower the distortion level 802.

Fig. 8 shows an exemplary value of an IM power back-off 810 corresponding to the at least one IM symbol power 610 (i.e., the symbol power of the at least one IM symbol 410, e.g. illustrated in any one of the Figs. 12A, 12B, 12C, 13A, 13B, and 13C). The IM power back-off 810 may cause an IM distortion level 820 (e.g., a value of the EVM).

The IM power back-off 810 (i.e., the vertical line 810) shows an exemplary power back-off that may correspond to the IM symbol power 610 (i.e., the input power 610 in Fig. 6).

Fig. 8 further shows an exemplary value of a non-IM power back-off 808 corresponding to the symbol power of the non-IM symbol 408, e.g. as illustrated in any one of the Figs. 4, 5, 12A, 12B, 12C, 13A, 13B, 13B, and 13C. The non-IM symbol power 808 may cause a non-IM distortion level 820 (e.g., a value of the EVM).

The non-IM power back-off (i.e., the vertical line 808) indicates an exemplary power back-off according to the input power 608 (e.g., symbol power) in the Fig. 6 for the non-IM symbol 408. Therefore, the IM distortion level 820 due to the power back-off 810 is less than the non-IM distortion level 818 due to the power back-off 808.

Alternatively or in addition, the IM distortion level 820 due to the power back-off 810 of the IM symbol 410 may be less than a conventional IM distortion level of the conventional IM symbol 410' due to the reduced symbol power (briefly: reduced power).

There is a fundamental tradeoff between increasing symbol power 804 (e.g., for a power efficient operation of the power amplifier), and decreasing the distortion 802. For example, the maximum average symbol power may be chosen so that the distortions 802 allow high data peak rates (e.g., a predefined data rate and/or for at least radio devices within the cell center that are not limited by thermal noise or inter-cell interference). This leads to a requirement on a large enough PAPR which in turn leads to a requirement of a sufficiently high power back-off 804.

On the other hand, if less PAPR is enforced, less power back-off 804 may be applied, which increases the power efficiency and/or the maximum average symbol power which in turns improves the coverage in terms of data rates that can be offered to UEs 120 at the cell edge whose performance is limited by noise or inter-cell interference. The drawback is that the distortions 802 increase and this in turn limits the achievable peak data rates if the same PAPR threshold is applied uniformly to the radio devices 120 across the cell 101.

The symbol power (e.g., the input or output power of the PA 110) may be determined from counting the number of scheduled NZP RE, or from summing powers on the scheduled REs 406. This can be done either per branch associated with a single power amplifier and antenna, or a sum or average over multiple antenna branches could be used.

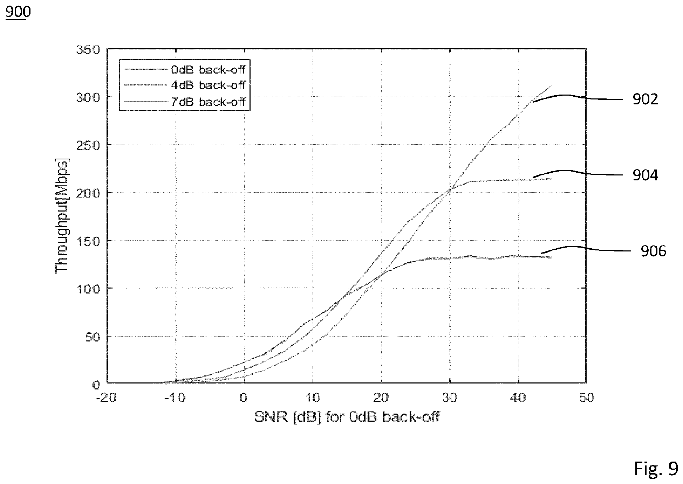

Fig. 9 shows results from a link level simulation of a 4x4 MIMO channel (e.g., for a transmission with up to rank 4) including iterative clipping and filtering for CFR. In the simulations, the same power spectral density is used for all OFDM symbols 404, i.e. the same power back-offs 804 are used for all OFDM symbols 404 in each simulation run. As is evident from the results shown in Fig. 9, different UEs 120 with different SNRs are served best by using different power spectral densities or power back-offs 804 depending on the respective SNR.

Fig. 9 shows an example of a relationship 902 between a SNR and a data rate (in terms of Mbps) when the power back-off 804 is fixed to 7 dB for the at least one IM symbol 410 as well as all other OFDM symbols 408. This power back-off 804 may reduce the symbol power such that the throughput and/or the interference measurement (IM) at the UE 120 is not influenced or even dominated (i.e., limited) by the distortion caused at the network node 100, e.g., if the UE 120 is in a central area of the cell 101, i.e. for high SINR. The power back-off may be a maximum power back-off, e.g. the least symbol power or power spectral density that is used for the data transmission in the non-IM symbols 408.

Fig. 9 shows another example of a relationship 904 between a SNR and a data rate when the power back-off 802 is fixed to 4 dB for the at least one IM symbol 410 as well as all other OFDM symbols. This (e.g., medium) power back-off 804 can ensure that throughput and/or the IM at the UE 120 is not influenced or even dominated (i.e., limited) by the distortion caused at the network node 100, if the UE 120 is in an intermediate area between center and edge of the cell 101 (low SNRs).

Fig. 9 shows a further example of a relationship 906 between the data rate and the SNR when the power back-off 802 is fixed to 0 dB for the all the OFDM symbols, i.e., the symbol power is not reduced (e.g., relative to the nominal power). This (e.g., minimum) power back-off 804 can ensure that the IM at the UE 120 is not dominated (i.e., limited) by the distortion caused at the network node 100, if the UE 120 is in an edge the cell 101 (low SNRs). The PAPR may be about 4.0 to 4.5 dB for the case with 0 dB for the power back-off 802. It is noted that 0 dB for the power back-off 802 may correspond to a value close to 1 on the linear scale for the power back-off 802 in Fig. 8.

Fig. 9 illustrates that, with the largest (e.g., maximum) power back-off of 7 dB, a data rate transmission, e.g., up to 250 to 300 Mbps, may be achieved. Furthermore, Fig. 9 shows that the best power back-off depends on the SNR of the respective UE 120.

As it is shown in Fig. 9, for the lower power back-offs 804 (e.g., 0 dB), the data rate can reach to a saturation point (i.e., an approximate maximum reachable data rate) in about 20 dB SNR. For the middle power back-off 804 (e.g., 4 dB) the data rate can reach to a saturation point in a higher SNR (e.g., 30 dB). For the higher power back-off 804 (e.g., 7 dB) the data rate may linearly depend on the SNR (optionally reaching a saturation point at 45 dB SNR or higher).

An improved control strategy (e.g., according to the method aspect) may be that the symbol power is reduced only for UEs 120 for which it is the distortion (e.g., as a major part of the interference beside all other possible interferences) that limits their SINR and not inter-cell interference or (thermal) noise. For instance, very high peak data rates may be offered to UEs 120 close to the center of the cell 101, since the higher possible choice of back-off reduces the distortions. As to another exemplary consequence, for UEs 120 at cell 101 edge, where (thermal) noise and/or inter-cell interference are the major sources of limiting the SINR, such a power back-off 804 (i.e., a reduction of the IM symbol power) is not needed, since the distortions caused by the network node 100 are not limiting the performance.

This adaptive scheme, in which the power back-off 804 of at least one of the non-IM symbol 408 and the IM symbol 410 (i.e., the IM symbol power 610) is changed (i.e., adjusted) depending on the location and/or SNR of the served UE 120 can offer as good coverage as possible without sacrificing high peak data rates.

The selective reduction of the IM symbol power 610 (briefly: reduced power 610) can be achieved according to the step 202. In other words, the step 202 allows the network node 100 to select a suitable power back-off 804 (e.g., to obtain the CSI report in the step 204 for changing selectively increasing the power, if the UE 120 is in the central area of the cell 101).

More specifically, other signals such as PDSCH carrying data may be transmitted in the same IM symbol 410 as the CSI-IM (e.g., as illustrated in any one of the Figs. 4, 5, 12A-12C, 13A-13C). This means that the at least one IM symbol 410, e.g. including both CSI-IM and PDSCH, will be subjected to CFR which in turn could lead to distortions from the subcarriers containing PDSCH to contaminate the CSI-IM subcarriers 412. As a result, the network node 100 could transmit distortions within the RE 412 allocated for the CSI-IM. From the perspective of the UE 120, the interference measured on the set 412 of CSI-IM REs will not only include noise and inter-cell interference, but also distortions from the other signals transmitted within the IM symbol 410. Since the UE 120 cannot distinguish whether the interference is due to the distortion caused at the network node 100 (e.g., from CFR) or from neighboring network nodes, the UE 120 may only report low CQIs or CQls lower than the actual channel capacity, e.g., since the SINRs measured at the UE 120 is low or lower than the actual channel capacity because it is limited by the distortion. Consequently, a conventional network node will assume that all UEs 120 have low effective SINRs and will not see a need to higher power back-off 804 for those UEs 120 that experience low inter-cell interference and noise.

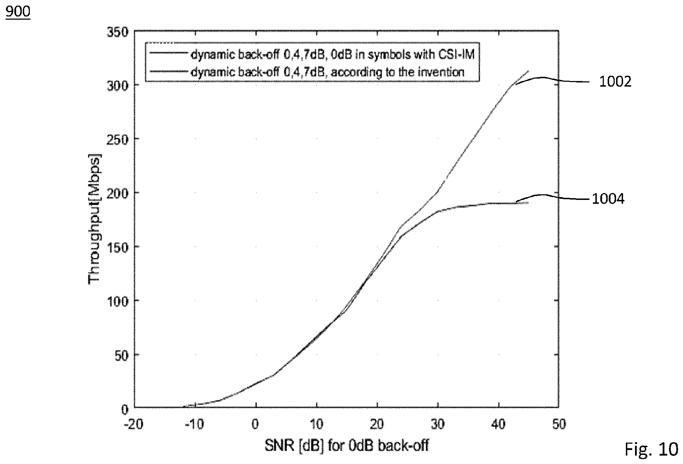

Fig. 10 shows results from a link level simulation for adaptively (e.g., dynamically) setting the power for REs in the at least one IM symbol 410 outside of the set 412 of REs used for the IM or all future OFDM symbols (i.e., after receiving and processing the CSI report). For example, REs (as examples of NZP REs) of a PDSCH are transmitted in the at least one IM symbol 410.

The symbol power of the OFDM symbols 404, e.g., the non-IM symbol power 608 and/or the IM symbol power 610, is set (e.g., selected), optionally reduced, based on the at least one CSI report. For example, both the non-IM symbol power 608 and the IM symbol power 610 is set based on the modulation order corresponding to the CQI index reported in the CSI report. By way of example, if the CQI is associated with QPSK or 16-QAM, no power back-off is done, i.e., the power back-off 804 is 0 dB. If the CQI is associated with 64-QAM, the power back-off 804 is 4 dB. If the CQI is associated with 256-QAM, the power back-off 804 is 7dB.

Due to the reduced power, the network node 100 receives a reliable CSI report (e.g., more accurate and/or less underestimating the channel quality due to the distortion caused by the network node 100) from the UE 120. The network node 100 may be able to set the power in the IM symbols and/or the non-IM symbols for future transmission dynamically.

The downlink channel from the network node 100 to the UE 120 may be a 4x4 MIMO channel (e.g., with rank up to 4) including iterative clipping and filtering for CFR.

Fig. 10 illustrates a benefit in terms of higher data rate according to the proposed method 200. For concreteness, and not limitation, Fig. 10 shows the results 1002 with adaptive (e.g., dynamic) power back-off 804 for a case that the PDSCH symbols is transmitted in the same symbol 410 as the CSI-IM. In this example the transmit power in the IM symbol may be kept lower than or equal to the transmit power in any other non-IM symbol. For comparison, Fig. 10 further shows the relationship 1004 between the data rate and the SNR with a fixed power back-off 804, e.g. as is illustrated in Fig. 9. With a fixed power back-off 804 (e.g., that is less than the maximum power back-off), the data rates may be limited by the distortion caused by the network node 100 at high channel quality, e.g., the data rate may be limited to 200 Mbps.

For comparison, the performance for the same baseline 1002 adaptive solution according to the method 200 is also shown. Any embodiment may use an extended table for the CQI index in order to determine the power back-off.

Any embodiment may use the below table, e.g., by extending the Table 5.2.2.1-3 of the 3GPP document TS 38.214, version 16.7.0. The first and last columns may be used in any embodiment for setting the power back-off 804 based on a 4-bit CQI.

| **CQI index** | **Modulation** | **Code rate x 1024** | **Efficiency** | **Power back-off** |
|---|---|---|---|---|
| 0 | out of range | | | |
| 1 | QPSK | 78 | 0.1523 | 0 dB |
| 2 | QPSK | 193 | 0.3770 | 0 dB |
| 3 | QPSK | 449 | 0.8770 | 0 dB |
| 4 | 16QAM | 378 | 1.4766 | 0 dB |
| 5 | 16QAM | 490 | 1.9141 | 0 dB |
| 6 | 16QAM | 616 | 2.4063 | 0 dB |
| 7 | 64QAM | 466 | 2.7305 | 4 dB |
| 8 | 64QAM | 567 | 3.3223 | 4 dB |
| 9 | 64QAM | 666 | 3.9023 | 4 dB |
| 10 | 64QAM | 772 | 4.5234 | 4 dB |
| 11 | 64QAM | 873 | 5.1152 | 4 dB |
| 12 | 256QAM | 711 | 5.5547 | 7 dB |
| 13 | 256QAM | 797 | 6.2266 | 7 dB |
| 14 | 256QAM | 885 | 6.9141 | 7 dB |
| 15 | 256QAM | 948 | 7.4063 | 7 dB |

In an embodiment, the greater the CQI index (e.g., as indicated in the first column of above Table), the greater the power back-off (e.g., that is applied to the IM symbol 410 and/or the non-IM symbol 408). In another embodiment, the power back-off may be a function of the modulation associated with the power back-off, e.g. as is the case for Fig. 9 or 10. The network node 100 may set (e.g., select) zero power back-off for QPSK and 16-QAM (i.e., for the CQI indices 1-6), 4 dB power back-off for 64-QAM (i.e., for the CQI indices 7-11), and 7 dB power back-off for 256QAM (i.e., for the CQI indices 12-15).

At least some embodiments of the method 200 can make sure that the CSI reports received from the UE 120 in the step 202 do not contain too much distortions, since the network node 100 uses the CSI report from radio device 120 to determine power back-off which in turn impacts the distortions. This is done by setting (e.g., controlling) the power (e.g., the IM symbol power 610 or the transmission power of the IM symbol 410 and/or non-IM symbol power 608 or the transmission power of the non-IM symbol 408) according to the step 206 of the method 200.

The method 200 may be implemented at the network node 100 without knowledge about the distortion level as a function of distortions or power. For example, any embodiment of the network node 100 may control the IM symbol power 610 by starting with a maximum power back-off (i.e., a minimum IM symbol power).

According to one embodiment, NZP REs outside of the set 412 are reserved dynamically only when needed (e.g., for the PDCCH and/or the PDSCH). That means if only UEs 120 with the maximum power back-off are scheduled in the slot with the CSI-IM, i.e., the slot comprising the at least one IM symbol 410, then no NZP REs are reserved. If, however, this is not the case, the NZP REs are reserved (e.g., for the PDCCH and/or the PDSCH), and this decision (e.g., scheduling) is done for each slot and signaled to the UE 120 receiving the respective slot.

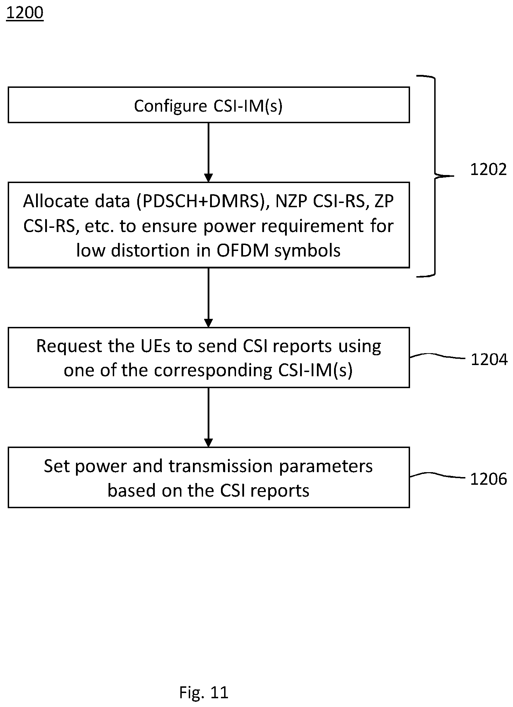

Fig. 11 shows an exemplary flowchart of an embodiment according to the method 1200 of controlling a distortion for an IM by controlling a power in a radio transmission of OFDM symbols from a network node 100 to a radio device 120. In other words, the steps in the Fig. 10 may implement the method 1200 and/or may be performed by the device 100 of the Fig. 1. The method 1200 may be implementable by the network node 100.

In a first part of step 1202, the network node 100 configures the CSI-IM REs, i.e., ZP REs associated with the IM. The resulting configuration for the CSI-IM may be indicative of a number of ZP REs reserved for the IM and/or a location of the IM REs 412 in the OFDM symbol). The step 1202 may comprise determining a periodicity, an offset within each period (e.g., relative to a boundary of a radio frame), and/or the exact CSI-RS configuration.

The network node 100 may then inform the UEs 120 as to which NZP REs for a NZP-CSI-RS and/or IM REs 412 for a ZP-CSI-RS (which may be collectively referred CSI-RS resources) the UEs 120 shall use for CSI measurements and/or reporting. This may further comprise signaling which NZP-CSI-RS to use for channel estimation and which (e.g., ZP-CSI-RS) CSI-IM resource to use for the IM. This typically may happen when the UE 120 connects (or reconnects) to the cell 101 served by the network node 100.

Transmitting the CSI configuration may use RRC signaling and/or may not be necessarily on a slot level or within every period of the CSI-IM.

In a second part of the step 1202, the network node 100 allocates at least one of data (e.g., for the PDSCH and/or associated demodulation reference signals, DM-RS), control signaling (e.g., for the PDCCH, i.e., downlink control information, DCI), and additional reference signals (RSs) such as NZP CSI-RS to the remaining REs within the at least one IM symbol (i.e., the REs outside of the set 412) and/or the remaining REs within each slot.

In the allocation according to the step 1202, the network node 100 may ensure that all OFDM symbols 404 in which the IM (e.g., the CSI-IM) has been allocated (i.e., the at least one IM symbol 410) will have a symbol power (e.g., a total power over all the carriers of the whole OFDM symbol) that corresponds to what the symbol power (e.g., total power) for a non-IM symbol 408 (e.g., another OFDM symbol other than NZP-CSI-IM) would be if it were to transmit data with a maximum power back-off (e.g., 7 dB).

In at least some embodiments the controlling of the power for IM symbol 410 is only enforced when the network node 100 knows that it will request a CSI report according to step 1204.

In the step 1204 of the method 1200, the network node 100 may request the radio devices 120 to transmit one or more CSI reports which are determined using the CSI-RS configuration, which (as mentioned above) includes a CSI-IM. A specific UE 120 may be requested to report the CSI periodically, for example with the same period as the CSI-IM (i.e., the at least one IM symbol 410, wherein neighboring IM symbols define one instance) or periodically, i.e. when needed because there is data to be transmitted and the last CSI report is outdated.

The network node 100 receives the at least one CSI report in the step 1204. Each of the at least one CSI report may be indicative of a rank indicator (RI), a precoding matrix indicator (PMI), and/or a channel quality indicator (CQI), which the UE 120 has determined using the configured CSI-RS resources. The UE 120 typically has a NZP-CSI-RS with the same periodicity as the CSI-IM, so that the channel quality may be measured as well as the interference.

At least some embodiments may perform the step 1204 before the second part of step 1202.

In the step 1206 of the method 1200, based on the present and possibly also previous CSI reports, the network node 100 sets (e.g., determines) a suitable power (e.g., the set power). In one embodiment, the power is a function of the CQI (e.g., based on the CQI in the at least one CSI report). The CQI corresponds to one out of several predefined combinations of modulation and coding schemes ordered in increasing modulation orders and data rate. In the Table 1, an example of a CQI Table 1 is given.

The network node 100 sets the power (e.g., the power back-off or the symbol or transmission power) and other transmission parameters based on the CSI reports. The step 1206 may comprise receiving the at least one CSI report and processing the CSI report to set (e.g., select) a power for the transmission of at least one of the PDSCH and the DMRS.

In an embodiment, the network node 100 may set (e.g., select) the power (e.g., power back-off 810 or the symbol or transmit power 610) depending on the CSI (e.g., CQI). In another embodiment, the power is set based further depending on the RI.

Above in Table 1, an example of a mapping of CQI index (in the CSI report received in the step 204) to the power back-off 810 (or the IM symbol power 610) is given, which may be used in any embodiment. Alternatively or in addition, the mapping may be determined empirically, e.g. by means of simulations or experiments in the field. For example for each CQI index, a performance may be measured for a set of different values of the power (e.g., 610 or 810) and after enough experiments have been done, for each CQI index the power (e.g., 610 or 810) that on average gives the best performance may be set (e.g., selected). The best performance may be measured in terms of data rate.

After the power has been applied it is also possible to adjust the CSI report to take into account the power, for example using a so called outer loop, which based on ACK/NACK feedback from the UEs determines an offset to be applied the reported CQI before selecting a modulation and coding scheme.

Each of the Figs. 12A, 12B, and 12C schematically illustrates an example of controlling a distortion for an interference measurement by controlling a power according to embodiments of method 200.

In the step 202 of the method 200, the network node 100 may transmit the at least one IM symbol 410 comprises zero power resource elements (ZP REs) 414 (e.g., 412 and/or 422), and zero or more non-zero power resource elements (NZP REs) 418 to the UE 120. A set 412 of the ZP REs 412 is allocated to the IM at the radio device 120. The power in subcarriers 402 outside of the set 412 and in each of the at least one IM symbol 410 is less than or equal to a power in the subcarriers 402 outside of the set 412 and in another symbol 408 out of the OFDM symbols 408, 410 other than the at least one IM symbol 410. In another words, the power in a first set 426 of REs outside of the set 412 is less than or equal to the power in a second set 416 of the same subcarriers in the non-IM symbol 408.

Moreover, each of the Figs. 12A to 12C schematically illustrates examples of how to allocate data in remaining REs (i.e., the REs outside of the set 412 or the REs other than reserved REs associated with the IM) in the IM symbols 410, e.g., in any OFDM symbol with ZP CSI-RS or any OFDM symbol associated with the IM. The IM REs 412, i.e., the empty REs configured as ZP CSI-RS for the IM, are marked by a thick square line (i.e., set 412) in each of the Figs. 12A to 12C.

It is not possible or not recommended to simply reduce the power of REs 426 outside of the set 412 (e.g., the transmitted data REs) selectively in some OFDM symbols 404, as this would cause the receivers to operate sub-optimally when receiving data transmission, especially for higher-order modulation such as 16-QAM and higher.

According to some embodiments, the network node 100 may configure CSI measurement resources (i.e., IM REs 412) and schedule the remaining resources (e.g., including ZP REs 420 and/or NZP REs 422) so that the IM symbol power (e.g., the total transmit power) in the REs of the IM symbol 410 (e.g., other than 412, i.e., outside of the set 412 and/or in the set of REs 426) is equal to or less than (i.e., not higher than) what it would be for a maximum power back-off (e.g., 7 dB) in an equal or similar number of REs (e.g., NZP REs) in one or more non-IM symbols 408 (i.e., in the set of REs 416).

In other words, the power in a first set 426 of REs in subcarriers 402 outside of the set 412 and in each of the at least one IM symbol 410 is less than or equal to the power of a second set 416 of REs in the subcarriers 402 outside of the set 412 and in another symbol 408 out of the OFDM symbols other than the at least one IM symbol 410.

To ensure that the interference from CFR induced distortion is low enough, the network node 100 may configure the REs such that the power in each of the at least one IM symbol 410 (i.e., any OFDM symbol including the CSI-IM) does not exceed the power corresponding to a maximum power back-off (e.g., nominal power-7 dB) in the similar numbers of REs in non-IM symbols 408 (i.e., set of REs 416). In other words, the network node 100 may control the distortion by controlling a power for an interference measurement (IM).

An exemplary embodiment of the method 200 may allocate resource for data transmission (e.g., for the PDSCH and the DM-RS) and only use the maximum power back-off. This means that there is a constraint on how UEs 120 may be scheduled in the slots with the CSI-IM. To avoid this constraint, so that any UE 120, independent of power back-off, may be scheduled in the slot with the CSI-IM, the power should be reduced in different ways, as is described next.

There are multiple ways to do this. In one embodiment, the network node 100 can for example use reserved resources or ZP-CSI-RS to keep some REs 420 blank and thereby lower the symbol power (e.g., total power) within the IM symbol 410.

One way to reduce the power of the OFDM IM symbols 410 may be to reserve REs in them so that they are empty and/or blanked and/or muted (e.g., zero power) and not used for data transmission (e.g., DM-RS and PDSCH). In NR, REs can be reserved with symbol and PRB level of granularity (for individual OFDM symbols 404 or PRB 403. Another possibility available with the current standard may be to configure one or several additional ZP CSI-RS 420 in the same IM symbol 410. The numbers of REs 422 that could be used for data transmission depends on the desired power. Figs. 12A to 12C show three examples according to embodiments of the method 200.

Fig. 12A shows an example that the entire OFDM symbol 410 associated with the IM (i.e., the at least one IM symbol) may be kept blank (i.e., empty), corresponding to an infinite power back-off or in other words the symbol power P (e.g., total power) in the IM symbol 410 may be zero. In this example, the total number of ZP REs in the IM symbol 410 (including the set 412 and the ZP REs 420 outside of the set 412), i.e., in a set 414, is equal to 12. In this example, the network node 100 ensure that the power in the first set 426 is less than the power in the second set 416.

Fig. 12B shows an example of eight reserved REs remaining blank (i.e., empty) as the ZP REs 414 in two neighboring IM symbols 410. In addition to the four ZP CSI-RS REs 412 (i.e., the arrangement 2×2 of IM REs 412), four REs 420 within each of the two neighboring IM symbols 410 are empty. Six remaining REs 422 in each of the two neighboring IM symbols 410 are NZP REs 422.

The NZP REs 422 in each IM symbol may be referred to as set 418. The NZP REs 422 in the set 418 may be configured to transmit PDSCH and/or DM-RS. Assuming the symbol power (e.g., the total transmitted power) in the second set 416 is P (e.g., the total transmitted power in the similar numbers of REs in the symbols 410 which is not associated to the IM), a total power of 3 dB or 4 dB or 7 dB below P is transmitted by the combination of NZP REs 422 and ZP REs 412 and 420 in each of the one or more IM symbols 410 (i.e., the total power of the first set 426). The total number of ZP REs 420 and 412 within the at least symbols 410 (i.e., including the set 412) corresponds to the set 414.

As mentioned above, an option to reserve REs 420 may be to configure multiple ZP CSI-RS. For example, the eight reserved REs 420 outside of the set 412 could be two sets of ZP-CSI-RS with four REs 420 each. Preferably, these ZP CSI-RS 420 must not be used by or for any UE 120 at all.

Fig. 12C schematically illustrates a set of nine REs 414 that are blank (i.e., empty) within the IM symbol 410 in which ZP CSI-RS are configured (out of which four REs 412 are ZP CSI-RS used for the IM and five are reserved REs 420). Three NZP REs 422 are used to transmit data (e.g., PDSCH and/or DMRS). That leads to the OFDM symbol 410 (e.g., first set 426) having less power (for example a total power of P-6dB) than the total power P of the second set 416 in non IM symbol 408.

The network node 100 may control the power in IM symbol by determining subcarriers allocated to the ZP REs 420 in the at least one IM symbol 410. The network node 100 may further determine a number of the ZP REs 412 and/or 420 in the at least one IM symbol 410. By means of controlling the power in IM symbol, the network node 100 can control the distortion level due to the PA 110 and/or the PAPR reduction unit.

In another embodiment, the network node 100 may configure NZP CSI-RS with a set power in the at least one IM symbol 410. The set power level may be lower (e.g., reduced power) compared to the power of REs for transmitting data (PDSCH and/or DMRS) in the OFDM symbol 408. Examples are provided with reference to the Figs. 13A to 13C.

Yet another embodiment may schedule data (PDSCH and/or DMRS) to a certain UE 120, only if it the maximum power back-off is used for that UE 120.

Each of Figs. 13A, 13B, and 13C schematically illustrates some other example of controlling a distortion for an interference measurement by controlling a power, according to embodiments of method 200. Figs. 13A to 13C show examples of how to allocate data and NZP CSI-RS in symbols with ZP CSI-RS (e.g., the IM symbols 410). The NZP CSI-RS may then be used by the same UE 120 and/or other UEs 120.

The network node 100 may reduce the power in each of the at least one IM symbols 410 (e.g., OFDM symbols with CSI-IM) by means of allocating NZP CSI-RS 424 with a set power (e.g., reduced power). The set power may be an average power of REs within 418, which is lower than the average power of similar numbers of REs in the first set 416. Figs. 13A to 13C shows three examples according to embodiments of the method 200.

In Fig. 13A, ZP CSI-RS for CSI-IM is configured as 2x2 REs 412 within two neighboring IM symbols 410. The desired power in the set of NZP REs 418 in two IM symbols 410 is less (for example P- 3 dB) than the similar numbers of REs in non IM symbols 408 (i.e., first set 416). The network node 100 configures a set of 16 NZP CSI resource elements 424 with a set power and a set of 4 NZP REs 422 for transmitting data (PDSCH and/or DM-RS). The set power of REs 424 is less than the average power of a RE in a non-IM symbol 408. The network node 100 may configure the number of NZP REs 424, and the set power for them according to the desired power.

The IM symbol 410 according to this example may comprise two NZP REs 422 with nominated power (e.g. average power). In other words the total power transmitted in the first set 426 in each IM symbol is less than the total power transmitted in the second set 416 (for example 3 dB).

In Fig. 13B, ZP CSI-RS for CSI-IM is configured as 4x1 REs 412 within one IM symbol 410. The desired power in the set of NZP REs 418 in two IM symbols 410 is less (for example P- 3 dB) than the similar numbers of REs in non IM symbols 408 (i.e., first set 416). The network node 100 configures a set of 4 NZP CSI resource elements 424 with a set power and a set of 4 NZP REs 422 for transmitting data (PDSCH and/or DMRS). The set power of REs 424 is less than the average power of a RE in a non IM symbol 408. The network node 100 may configure the number of NZP REs 424, and the set power for them according to the desired power.

The IM symbol 410 according to this example may comprise 4 NZP REs 422 with nominated power (e.g. average power). In other words the total power transmitted in the first set 426 in each IM symbol is less than the total power transmitted in the second set 416 (for example 3 dB).

In Fig. 13C, ZP CSI-RS for CSI-IM is configured as 4x1 REs 412 within two IM symbols 410. The desired power in the set of NZP REs 418 in two IM symbols 410 is less (for example P- 6 dB) than the similar numbers of REs in non IM symbols 408 (i.e., first set 416). The network node 100 configures a set of 8 NZP CSI resource elements 424 with a set power and no NZP REs 422 for transmitting data (PDSCH and/or DM-RS). The set power of REs 424 is less than the average power of a RE in a non IM symbol 408. The network node 100 may configure the number of NZP REs 424, and the set power for them according to the desired power.

The IM symbol 410 according to this example may comprise no NZP REs 422 with nominated power (e.g. average power). In other words the total power transmitted in the first set 426 in each IM symbol is less than the total power transmitted in the second set 416 (for example 6 dB).

In addition to the embodiments mentioned above, in Figs. 12A to 12C and Figs. 13A to 13C, reserving REs (i.e., ZP CSI-RS) or using NZP CSI-RS with set (e.g., reduced) power, the network node 100 may use combination of the two above mentioned approaches.

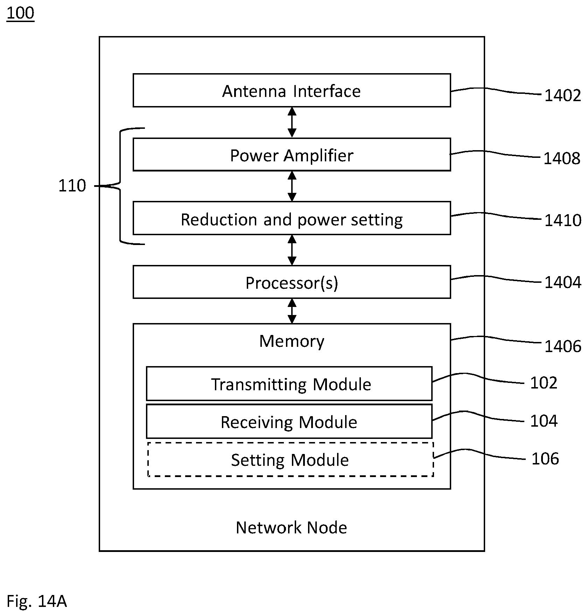

Fig. 14A shows a schematic block diagram for an embodiment of a device for controlling a distortion by controlling a power for an interference measurement (IM) in a radio transmission. The device is generically referred to by reference sign 100. The device 100 comprises an antenna interface 1402 modularly coupled with the device 100 for radio communication with one or more other devices 100 (e.g., network node or base station) or with one or more radio devices 120 (e.g., UEs 120). The device 100 comprises a power amplifier 1408 that modularly coupled to the device 100.

The device 100 comprises reduction and power setting 1410. The reduction and power setting unit 1410 may be an up-conversion unit, a peak-to-average-power ratio (PAPR) reduction unit (e.g., implemented in a digital domain or analog domain of the network node).The reduction and power setting 1410 may be modularly coupled to the device 100. The power amplifier 110 may refer to the reduction and power setting 1410 and the power amplifier 1408. The device 100 may comprise at least one memory 1406 modularly coupled with the device 100. For example, the memory 1406 may be encoded with instructions that implement at least one of the modules 102, 104, and 106.

The device 100 may comprise at least one processor 1404 for performing the method 200. The one or more processors 1404 may be in combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide either alone or in conjunction with other components of the device 100, such as the memory 1406, network node functionality. For example, the one or more processors 1404 may execute instructions stored in the memory 1406. Such functionality may include providing various features and steps discussed herein, including any of the benefits disclosed herein. The expression "the device being operative to perform an action" may denote the device 100 being configured to perform the action.

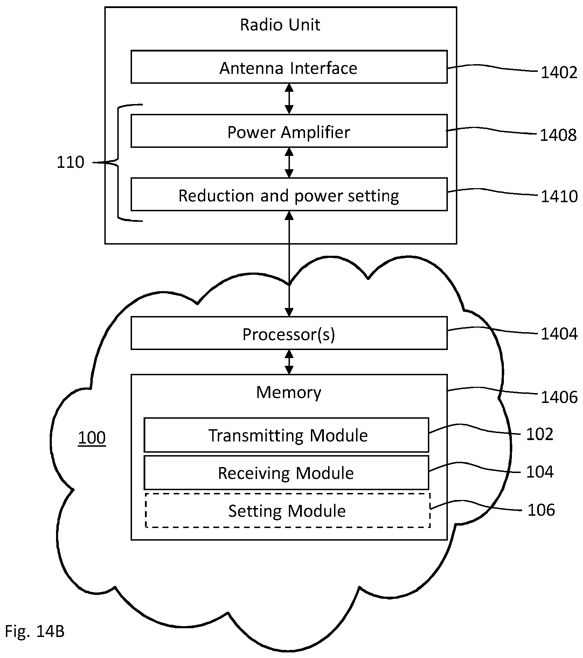

According to some embodiments, the network node 100 may comprise a radio unit comprising antenna interface 1402 and a PA 110, and processor(s) 1404 and memory 1406 comprising transmitting module 102, receiving module 104 and setting module 106, that are functionally or modularly coupled to each other. The processor 1404 may control or execute all the units and modules in the network node 100. Modules and units of device 100, as is shown in Fig. 14A and Fig. 14B, are in communication with each other.

Fig. 14B shows a schematic block diagram for an embodiment of a device for controlling a distortion by controlling a power for an IM in a radio transmission. Like reference sign as in Fig. 14A may be indicative of equal features or functions. The device is generically referred to by reference sign 100. The device 100 comprises at least one processor 1404 for performing the method 200. The device 100 may comprise at least one memory 1406 modularly coupled with the device 100. For example, the memory 1406 may be encoded with instructions that implement at least one of the modules 102, 104, and 106.

According to some other embodiments the device 100 may comprise processor(s) 1404 and memory 1406 comprising transmitting module 102, receiving module 104 and setting module 106, modularly coupled to each other. The device 100 may be part of a computer network (also referred to as a cloud), i.e., a central unit (CU) (e.g., a central network, or intermediate network or host computer). The CU may be in communication and/or including a distribution unit (DU). The device 100 may be in communication with the radio unit (RU) comprising antenna interface 1402, power amplifier 1408 and reduction and power setting 1410. The device 100 of Fig. 14B configured to perform any steps according to the first method aspect 200. The device 100 of Fig. 14B in combination with radio unit may functioning as a transmitting base station (e.g., network node).

Any of the modules of the device 100 may be implemented by units configured to provide the corresponding functionality.

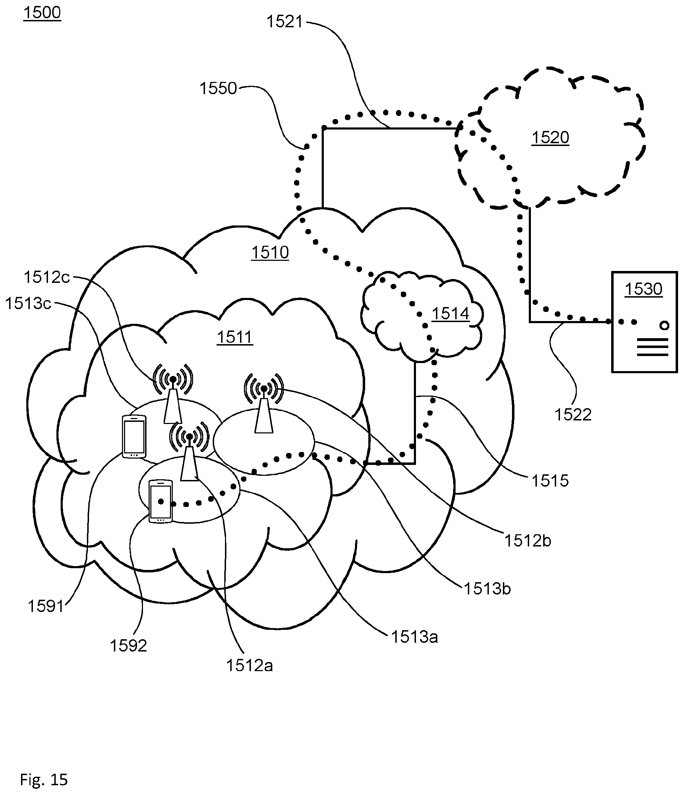

With reference to Fig. 15, in accordance with an embodiment, a communication system 1500 includes a telecommunication network 1510, such as a 3GPP-type cellular network, which comprises an access network 1511, such as a radio access network, and a core network 1514. The access network 1511 comprises a plurality of base stations 1512a, 1512b, 1512c, such as NBs, eNBs, gNBs or other types of wireless access points, each defining a corresponding coverage area 1513a, 1513b, 1513c. Each base station 1512a, 1512b, 1512c is connectable to the core network 1514 over a wired or wireless connection 1515. A first user equipment (UE) 1591 located in coverage area 1513c is configured to wirelessly connect to, or be paged by, the corresponding base station 1512c. A second UE 1592 in coverage area 1513a is wirelessly connectable to the corresponding base station 1512a. While a plurality of UEs 1591, 1592 are illustrated in this example, the disclosed embodiments are equally applicable to a situation where a sole UE is in the coverage area or where a sole UE is connecting to the corresponding base station 1512.

Any of the base stations 1512 and the UEs 1591, 1592 may embody the device 100.

The telecommunication network 1510 is itself connected to a host computer 1530, which may be embodied in the hardware and/or software of a standalone server, a cloud-implemented server, a distributed server or as processing resources in a server farm. The host computer 1530 may be under the ownership or control of a service provider, or may be operated by the service provider or on behalf of the service provider. The connections 1521, 1522 between the telecommunication network 1510 and the host computer 1530 may extend directly from the core network 1514 to the host computer 1530 or may go via an optional intermediate network 1520. The intermediate network 1520 may be one of, or a combination of more than one of, a public, private or hosted network; the intermediate network 1520, if any, may be a backbone network or the Internet; in particular, the intermediate network 1520 may comprise two or more sub-networks (not shown).

The communication system 1500 of Fig. 15 as a whole enables connectivity between one of the connected UEs 1591, 1592 and the host computer 1530. The connectivity may be described as an over-the-top (OTT) connection 1550. The host computer 1530 and the connected UEs 1591, 1592 are configured to communicate data and/or signaling via the OTT connection 1550, using the access network 1511, the core network 1514, any intermediate network 1520 and possible further infrastructure (not shown) as intermediaries. The OTT connection 1550 may be transparent in the sense that the participating communication devices through which the OTT connection 1550 passes are unaware of routing of uplink and downlink communications. For example, a base station 1512 need not be informed about the past routing of an incoming downlink communication with data originating from a host computer 1530 to be forwarded (e.g., handed over) to a connected UE 1591. Similarly, the base station 1512 need not be aware of the future routing of an outgoing uplink communication originating from the UE 1591 towards the host computer 1530.

By virtue of the method 200 being performed by any one of the base stations 1512, the performance or range of the OTT connection 1550 can be improved, e.g., in terms of increased throughput and/or reduced latency. More specifically, the host computer 1530 may perform the method steps 202, 204 and 206 according to the first method aspect. In other words, the host computer 1530 may perform as a CU of the network node 100 (e.g., RAN 300) illustrated in Fig. 14B.

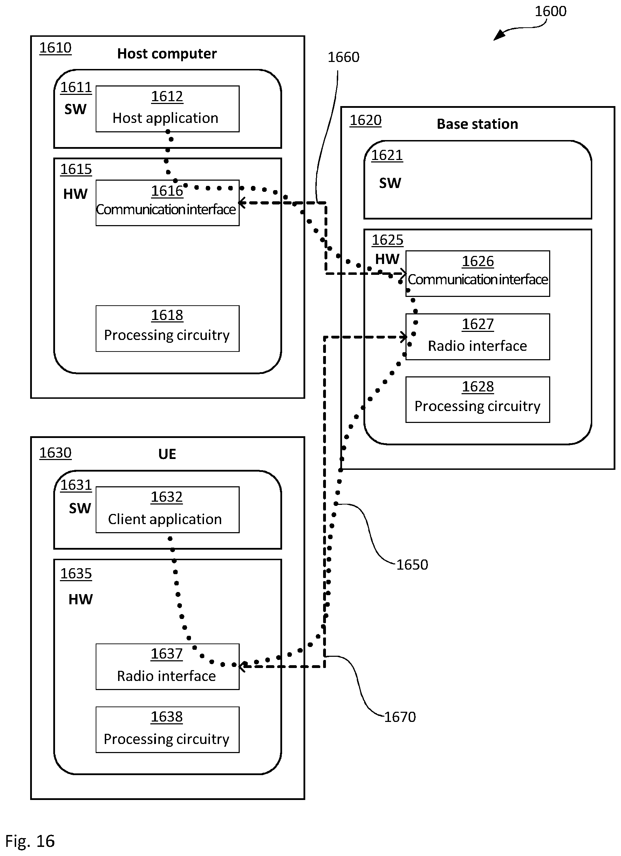

Example implementations, in accordance with an embodiment of the UE, base station and host computer discussed in the preceding paragraphs, will now be described with reference to Fig. 16. In a communication system 1600, a host computer 1610 comprises hardware 1615 including a communication interface 1616 configured to set up and maintain a wired or wireless connection with an interface of a different communication device of the communication system 1600. The host computer 1610 further comprises processing circuitry 1618, which may have storage and/or processing capabilities. In particular, the processing circuitry 1618 may comprise one or more programmable processors, application-specific integrated circuits, field programmable gate arrays or combinations of these (not shown) adapted to execute instructions. The host computer 1610 further comprises software 1611, which is stored in or accessible by the host computer 1610 and executable by the processing circuitry 1618. The software 1611 includes a host application 1612. The host application 1612 may be operable to provide a service to a remote user, such as a UE 1630 connecting via an OTT connection 1650 terminating at the UE 1630 and the host computer 1610. In providing the service to the remote user, the host application 1612 may provide user data, which is transmitted using the OTT connection 1650. The user data may depend on the location of the UE 1630. The user data may comprise auxiliary information or precision advertisements (also: ads) delivered to the UE 1630. The location may be reported by the UE 1630 to the host computer, e.g., using the OTT connection 1650, and/or by the base station 1620, e.g., using a connection 1660.

The communication system 1600 further includes a base station 1620 provided in a telecommunication system and comprising hardware 1625 enabling it to communicate with the host computer 1610 and with the UE 1630. The hardware 1625 may include a communication interface 1626 for setting up and maintaining a wired or wireless connection with an interface of a different communication device of the communication system 1600, as well as a radio interface 1627 for setting up and maintaining at least a wireless connection 1670 with a UE 1630 located in a coverage area (not shown in Fig. 16) served by the base station 1620. The communication interface 1626 may be configured to facilitate a connection 1660 to the host computer 1610. The connection 1660 may be direct, or it may pass through a core network (not shown in Fig. 16) of the telecommunication system and/or through one or more intermediate networks outside the telecommunication system. In the embodiment shown, the hardware 1625 of the base station 1620 further includes processing circuitry 1628, which may comprise one or more programmable processors, application-specific integrated circuits, field programmable gate arrays or combinations of these (not shown) adapted to execute instructions. The base station 1620 further has software 1621 stored internally or accessible via an external connection.

The communication system 1600 further includes the UE 1630 already referred to. Its hardware 1635 may include a radio interface 1637 configured to set up and maintain a wireless connection 1670 with a base station serving a coverage area in which the UE 1630 is currently located. The hardware 1635 of the UE 1630 further includes processing circuitry 1638, which may comprise one or more programmable processors, application-specific integrated circuits, field programmable gate arrays or combinations of these (not shown) adapted to execute instructions. The UE 1630 further comprises software 1631, which is stored in or accessible by the UE 1630 and executable by the processing circuitry 1638. The software 1631 includes a client application 1632. The client application 1632 may be operable to provide a service to a human or non-human user via the UE 1630, with the support of the host computer 1610. In the host computer 1610, an executing host application 1612 may communicate with the executing client application 1632 via the OTT connection 1650 terminating at the UE 1630 and the host computer 1610. In providing the service to the user, the client application 1632 may receive request data from the host application 1612 and provide user data in response to the request data. The OTT connection 1650 may transfer both the request data and the user data. The client application 1632 may interact with the user to generate the user data that it provides.

It is noted that the host computer 1610, base station 1620 and UE 1630 illustrated in Fig. 16 may be identical to the host computer 1530, one of the base stations 1512a, 1512b, 1512c and one of the UEs 1591, 1592 of Fig. 15, respectively. This is to say, the inner workings of these entities may be as shown in Fig. 16, and, independently, the surrounding network topology may be that of Fig. 15.

In Fig. 16, the OTT connection 1650 has been drawn abstractly to illustrate the communication between the host computer 1610 and the UE 1630 via the base station 1620, without explicit reference to any intermediary devices and the precise routing of messages via these devices. Network infrastructure may determine the routing, which it may be configured to hide from the UE 1630 or from the service provider operating the host computer 1610, or both. While the OTT connection 1650 is active, the network infrastructure may further take decisions by which it dynamically changes the routing (e.g., on the basis of load balancing consideration or reconfiguration of the network).

The wireless connection 1670 between the UE 1630 and the base station 1620 is in accordance with the teachings of the embodiments described throughout this disclosure. One or more of the various embodiments improve the performance of OTT services provided to the UE 1630 using the OTT connection 1650, in which the wireless connection 1670 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1650 between the host computer 1610 and UE 1630, in response to variations in the measurement results. The measurement procedure and/or the network functionality for reconfiguring the OTT connection 1650 may be implemented in the software 1611 of the host computer 1610 or in the software 1631 of the UE 1630, or both. In embodiments, sensors (not shown) may be deployed in or in association with communication devices through which the OTT connection 1650 passes; the sensors may participate in the measurement procedure by supplying values of the monitored quantities exemplified above, or supplying values of other physical quantities from which software 1611, 1631 may compute or estimate the monitored quantities. The reconfiguring of the OTT connection 1650 may include message format, retransmission settings, preferred routing etc.; the reconfiguring need not affect the base station 1620, and it may be unknown or imperceptible to the base station 1620. Such procedures and functionalities may be known and practiced in the art. In certain embodiments, measurements may involve proprietary UE signaling facilitating the host computer's 1610 measurements of throughput, propagation times, latency and the like. The measurements may be implemented in that the software 1611, 1631 causes messages to be transmitted, in particular empty or "dummy" messages, using the OTT connection 1650 while it monitors propagation times, errors etc.

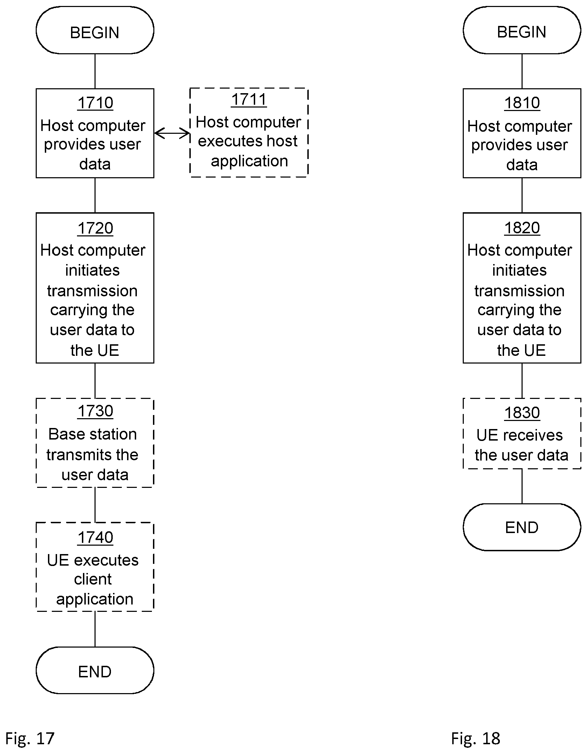

Fig. 17 is a flowchart illustrating a method implemented in a communication system, in accordance with one embodiment. The communication system includes a host computer, a base station and a UE which may be those described with reference to Figs. 15 and 16. For simplicity of the present disclosure, only drawing references to Fig. 17 will be included in this paragraph. In a first step 1710 of the method, the host computer provides user data. In an optional substep 1711 of the first step 1710, the host computer provides the user data by executing a host application. In a second step 1720, the host computer initiates a transmission carrying the user data to the UE. In an optional third step 1730, the base station transmits to the UE the user data which was carried in the transmission that the host computer initiated, in accordance with the teachings of the embodiments described throughout this disclosure. In an optional fourth step 1740, the UE executes a client application associated with the host application executed by the host computer.

Fig. 18 is a flowchart illustrating a method implemented in a communication system, in accordance with one embodiment. The communication system includes a host computer, a base station and a UE which may be those described with reference to Figs. 15 and 16. For simplicity of the present disclosure, only drawing references to Fig. 18 will be included in this paragraph. In a first step 1810 of the method, the host computer provides user data. In an optional substep (not shown) the host computer provides the user data by executing a host application. In a second step 1820, the host computer initiates a transmission carrying the user data to the UE. The transmission may pass via the base station, in accordance with the teachings of the embodiments described throughout this disclosure. In an optional third step 1830, the UE receives the user data carried in the transmission.

As has become apparent from above description, at least some embodiments of the technique allow that we can improve efficiency and/or coverage by reducing PAPR while still being able to offer high (peak) data rates within the coverage area of the network. Or, put another way, embodiments can offer high data rates in cell without penalizing performance for terminals at the cell edge.

Many advantages of the present invention will be fully understood from the foregoing description, and it will be apparent that various changes may be made in the form, construction and arrangement of the units and devices without departing from the scope of the invention as it is set forth in the following claims.

## Claims

1. A method (200) performed by a network node (100) of controlling a distortion for an interference measurement, IM, by controlling a power in a radio transmission of orthogonal frequency-division multiplexing, OFDM, symbols (408, 410) from the network node (100) to a radio device (120), the method (200) comprising the steps of:
transmitting (202) to the radio device (120), at least one IM symbol (410) out of the OFDM symbols (408, 410), wherein the at least one IM symbol (410) comprises zero power resource elements, ZP REs (412; 414), and zero or more non-zero power resource elements, NZP REs (418), wherein a set (412) of the ZP REs (412; 414) is allocated to the IM at the radio device (120), and wherein the power spectral density in resource elements, REs (406), outside of the set (412) and in said at least one IM symbol (410) is less than or equal to the power spectral density in resource elements, REs (406), in any symbol (408) out of the OFDM symbols (408, 410) other than said at least one IM symbol (410); and
receiving (204) at least one channel state information, CSI, report from the radio device (120), wherein the CSI report is indicative of a result of the IM based on the transmitted (202) at least one IM symbol (410).

2. The method (200) of claim 1, wherein the at least one IM symbol (410) comprises at least one ZP RE (414) not allocated for the IM at the radio device (120); and/or
wherein a power spectral density of at least one NZP RE (418) in subcarriers (402) outside of the set (412) and in the at least one IM symbol (410) is less than a power spectral density in the subcarriers (402) outside of the set (412) and in the other symbol (408) other than the at least one IM symbol (410); and/or
wherein the other symbol (408) is in another slot other than a slot comprising the at least one IM symbol (410),
optionally wherein a power spectral density of each of the symbols (404) in the slot comprising the at least one IM symbol (410) is less than a power spectral density of the other symbol (408) or each of the other symbols in the other slot other than the slot comprising the IM symbol (410).

3. The method (200) of any one of claims 1 to 2, further comprising or initiating at least one of the steps of:
setting (206) a power (608; 610) of at least one or each future OFDM symbol (408; 410) out of the OFDM symbols (408, 410), wherein the set power (608; 610) depends on the received (204) at least one CSI report;
setting (206) a power (608) of at least one or each future other symbol (408) out of the OFDM symbols (408, 410) other than IM symbols (410), wherein the set power (608) depends on the received (204) at least one CSI report; and
setting (206) a power (610) of at least one or each future IM symbol (410) out of the OFDM symbols (408, 410), wherein the set power (610) depends on the received (204) at least one CSI report.

4. The method (200) of claim 3, wherein the setting (206) comprises setting the power of at least one or each resource element, RE, in the respective symbol (408; 410), and/or
the set power (608; 610) is a decreasing function of a channel quality indicated by the received (204) at least one CSI report, and/or
the set power (608; 610) is an increasing function of a distance or a pathloss between the network node (100) and the radio device (120), and/or
the set power (608; 610) is decreased until a channel quality indicated by the at least one CSI report assumes a maximum or plateau.

5. The method (200) of any one of claims 1 to 4, further comprising or initiating the step of obtaining at least one of:
a nominal power (606) for the OFDM symbols (404; 408), optionally wherein the nominal power (606) is indicative of the power in the subcarriers (402) outside of the set (412) and in the other symbol (408);
a reduced power (610) for the at least one IM symbol (410) and/or a reduced power (610) for at least one or each future IM symbol (410), optionally wherein the reduced power (610) is indicative of the power in the subcarriers (402) outside of the set (412) and in the respective IM symbol (410); and
a power back-off (810) for the at least one IM symbol (410) and/or a power back-off (810) for at least one or each future IM symbol (410), optionally wherein the power back-off (810) is indicative of the power in the subcarriers (402) outside of the set (412) and in the respective IM symbol (410) relative to the power in the subcarriers (402) outside of the set (412) and in the other symbol (408).

6. The method (200) of claims 4 and 5, wherein the set power (608) is at least one of:
equal to or greater than the reduced power (610);
equal to or less than the nominal power (606); and
obtained based on the received (204) at least one CSI report.

7. The method (200) of claim 5 or 6, wherein the reduced power (610) of the at least one or each future IM symbol (410) out of the OFDM symbols (408, 410) is obtained based on the received (204) at least one CSI report,
optionally wherein at least one of:
the reduced power (610) is a decreasing function of a channel quality indicated by the received (204) at least one CSI report, and/or
the reduced power (610) is decreased until a channel quality indicated by the at least one CSI report assumes a maximum or plateau, optionally starting from the nominal power (606),
the reduced power (610) is increased until a channel quality indicated by the at least one CSI report assumes a maximum or plateau, optionally starting from a minimum of the reduced power (610) or a maximum of the power back-off (810); and/or
wherein the reduced power (610) of the at least one IM symbol (410) or the at least one or each future IM symbol (410) out of the OFDM symbols (408, 410) is an increasing function of a distance or a pathloss between the network node (100) and the radio device (120).

8. The method (200) of any one of claims 1 to 7, wherein the network node (100) comprises at least one of a power amplifier, PA, for the radio transmission and a peak-to-average-power ratio, PAPR, reduction unit for the OFDM symbols (408, 410) of the radio transmission; and/or
further comprising or initiating the step of transmitting a configuration message to the radio device (120), wherein the configuration message is indicative of at least one of:
- the IM;
- the IM symbol (410);
- the set (412) of ZP REs, optionally one ZP CSI reference signal;
- the zero or more ZP REs, optionally one NZP CSI reference signal;
- the nominal power (606) for the OFDM symbols (404; 408);
- the reduced power (610) of the at least on IM symbol (410); and
- the power back-off (810) of the at least one IM symbol (410), and/or
wherein the zero or more NZP REs (418) comprise NZP CSI reference signals, NZP CSI RS (424) and/or data signals (422) and/or demodulation reference signal, DM-RS, (422) of the radio transmission, and/or
wherein the configuration message is indicative of the NZP CSI RSs (424) allocated to a CSI measurement at the radio device (120), and/or
wherein the configuration message is indicative of the scheduling of the data signals (422), and/or
wherein the CSI report is indicative of a channel quality indicator, CQI, or a signal-to-interference and noise ratio, SINR, for the radio transmission based on:
- a signal strength, and
- a power of noise and/or interference measured in the set (412) of ZP REs in the IM at the radio device (120); optionally
wherein a power spectral density of the NZP CSI RS (424) is less than a power spectral density of the data signals (422) of the radio transmission.

9. The method (200) of any one of claims 1 to 8, wherein a or the reduced power (610) of the at least one IM symbol (410) corresponds to a linear combination of at least two of the ZP REs (412; 414), the NZP REs (422; 424), the NZP CSI RSs (424), and the data signals (422),
optionally wherein the linear combination is weighted by the number of REs (406) in the respective IM symbol (410) and/or a power spectral density in the respective IM symbol (410); and/or
wherein the ZP REs (412; 414) comprise at least one of:
ZP CSI resources (412) for the IM, optionally defining the set (412) of ZP REs (412; 414); and
muted or unallocated REs (420) of a physical downlink channel of the network node (100), optionally of a physical downlink shared channel, PDSCH; and/or wherein the at least one IM symbol (410) is periodically transmitted (202) and/or the at least one CSI report is periodically received (204); and/or
wherein the network node (100) determines at least one of:
subcarriers allocated to the ZP REs (412; 414) in the at least one IM symbol (410); and
a number of the ZP REs (412; 414) in the at least one IM symbol (410); and/or
wherein the network node (100) determines at least one of:
subcarriers allocated to the NZP REs (418; 422; 424) in the at least one IM symbol (410);
a number of the NZP REs (418; 422; 424) in the at least one IM symbol (410);
and
a power density of the NZP REs (418; 422; 424) in the at least one IM symbol (410).

10. A network node (100) for controlling a distortion for an interference measurement, IM, by controlling a power in a radio transmission of orthogonal frequency-division multiplexing, OFDM, symbols (408, 410) from the network node (100) to a radio device (120), the network node (100) comprising memory operable to store instructions and processing circuitry operable to execute the instructions, such that the network node (100) is operable to:
transmit, from the network node (100) to the radio device (120), at least one IM symbol (410) out of the OFDM symbols (408, 410), wherein the at least one IM symbol (410) comprises zero power resource elements, ZP REs (412; 414), and zero or more non-zero power resource elements, NZP REs (418), wherein a set (412) of the ZP REs (412; 414) is allocated to the IM at the radio device (120), and wherein the power spectral density in resource elements, REs (406), outside of the set (412) and in said at least one IM symbol (410) is less than or equal to the power spectral density in resource elements, REs (406), inany symbol (408) out of the OFDM symbols (408, 410) other than said at least one IM symbol (410); and
receive at least one channel state information, CSI, report from the radio device (120), wherein the CSI report is indicative of a result of the IM based on the transmitted (202) at least one IM symbol (410).

11. The network node (100) of claim 10, further operable to perform any one of the steps of any one of claims 2 to 9.

12. A communication system (1500; 1600) including a host computer (1530; 1610) comprising:
processing circuitry (1618) configured to provide user data; and
a communication interface (1616) configured to forward user data to a cellular or ad hoc radio network (1510) for transmission from a network node (100) to a radio device (120; 1591; 1592; 1630)
the communication system (1500; 1600) further including the network node (100), wherein the network node (100; 1512; 1620) comprises a radio interface (1402; 1627) and processing circuitry (1404; 1628), the processing circuitry (1404; 1628) of the network node (100; 1512; 1620) being configured to execute the steps of any one of claims 1 to 9.

13. The communication system (1500; 1600) of claim 12, further including a UE as the radio device (120; 1591; 1592; 1630).

14. The communication system (1500; 1600) of claim 12 or 13, wherein the radio network (1510) further comprises a base station as the network node (100; 1512; 1620), or a radio device (120; 1591; 1592; 1630) functioning as a gateway, which is configured to communicate with the UE (120; 1591; 1592; 1630).

15. The communication system (1500; 1600) of any one of claims 12 to 14, wherein:
the processing circuitry (1618) of the host computer (1530; 1610) is configured to execute a host application (1612), thereby providing the user data; and
the processing circuitry (1404; 1628) of the network node (100; 1512; 1620) is configured to execute a client application (1632) associated with the host application (1612).

## Patentansprüche

1. Ein Verfahren (200), das von einem Netzwerkknoten (100) durchgeführt wird, zum Steuern einer Verzerrung für eine Interferenzmessung, IM, durch Steuern einer Leistung in einer Funkübertragung von orthogonalen Frequenzmultiplex-Symbolen, OFDM-Symbolen, (408, 410) von dem Netzwerkknoten (100) an eine Funkvorrichtung (120), wobei das Verfahren (200) die folgenden Schritte beinhaltet:
Übertragen (202), an die Funkvorrichtung (120), mindestens eines IM-Symbols (410) aus den OFDM-Symbolen (408, 410), wobei das mindestens eine IM-Symbol (410) Null-Leistungs-Ressourcenelemente, ZP-REs, (412; 414) und null oder mehr Nicht-Null-Leistungs-Ressourcenelemente, NZP-REs, (418) beinhaltet, wobei ein Satz (412) der ZP-REs (412; 414) der IM an der Funkvorrichtung (120) zugewiesen ist und wobei die spektrale Leistungsdichte in Ressourcenelementen, REs (406), außerhalb des Satzes (412) und in dem mindestens einen IM-Symbol (410) kleiner oder gleich der spektralen Leistungsdichte in Ressourcenelementen, REs, (406) in einem beliebigen anderen Symbol (408) aus den OFDM-Symbolen (408, 410) als dem mindestens einen IM-Symbol (410) ist; und
Empfangen (204) mindestens eines Kanalzustandsinformations-Berichts, CSI-Berichts, von der Funkvorrichtung (120), wobei der CSI-Bericht ein Ergebnis der IM basierend auf dem übertragenen (202) mindestens einen IM-Symbol (410) anzeigt.

2. Verfahren (200) gemäß Anspruch 1, wobei das mindestens eine IM-Symbol (410) mindestens ein ZP-RE (414) beinhaltet, das der IM an der Funkvorrichtung (120) nicht zugewiesen ist; und/oder
wobei eine spektrale Leistungsdichte von mindestens einem NZP-RE (418) in Unterträgern (402) außerhalb des Satzes (412) und in dem mindestens einen IM-Symbol (410) kleiner als eine spektrale Leistungsdichte in den Unterträgern (402) außerhalb des Satzes (412) und in dem anderen Symbol (408) als dem mindestens einen IM-Symbol (410) ist; und/oder
wobei sich das andere Symbol (408) in einem anderen Slot als einem Slot befindet, der das mindestens eine IM-Symbol (410) beinhaltet,
optional wobei eine spektrale Leistungsdichte von jedem der Symbole (404) in dem Slot, der das mindestens eine IM-Symbol (410) beinhaltet, kleiner als eine spektrale Leistungsdichte des anderen Symbols (408) oder jedes der anderen Symbole in dem anderen Slot als dem Slot ist, der das IM-Symbol (410) beinhaltet.

3. Verfahren (200) gemäß einem der Ansprüche 1 bis 2, ferner beinhaltend oder initiierend mindestens einen der folgenden Schritte:
Einstellen (206) einer Leistung (608; 610) von mindestens einem oder jedem zukünftigen OFDM-Symbol (408; 410) aus den OFDM-Symbolen (408, 410), wobei die eingestellte Leistung (608; 610) von dem empfangenen (204) mindestens einen CSI-Bericht abhängt;
Einstellen (206) einer Leistung (608) von mindestens einem oder jedem zukünftigen anderen Symbol (408) aus den OFDM-Symbolen (408, 410) außer IM-Symbolen (410), wobei die eingestellte Leistung (608) von dem empfangenen (204) mindestens einen CSI-Bericht abhängt; und
Einstellen (206) einer Leistung (610) von mindestens einem oder jedem zukünftigen IM-Symbol (410) aus den OFDM-Symbolen (408, 410), wobei die eingestellte Leistung (610) von dem empfangenen (204) mindestens einen CSI-Bericht abhängt.

4. Verfahren (200) gemäß Anspruch 3, wobei das Einstellen (206) das Einstellen der Leistung von mindestens einem oder jedem Ressourcenelement, RE, in dem jeweiligen Symbol (408; 410) beinhaltet, und/oder
die eingestellte Leistung (608; 610) eine abnehmende Funktion einer Kanalqualität ist, die durch den empfangenen (204) mindestens einen CSI-Bericht angezeigt wird, und/oder
die eingestellte Leistung (608; 610) eine zunehmende Funktion eines Abstands oder eines Pfadverlusts zwischen dem Netzwerkknoten (100) und der Funkvorrichtung (120) ist, und/oder
die eingestellte Leistung (608; 610) verringert wird, bis eine Kanalqualität, die durch den mindestens einen CSI-Bericht angezeigt wird, ein Maximum oder Plateau annimmt.

5. Verfahren (200) gemäß einem der Ansprüche 1 bis 4, ferner beinhaltend oder initiierend den Schritt des Erhaltens von mindestens einem von:
einer Nennleistung (606) für die OFDM-Symbole (404; 408), optional wobei die Nennleistung (606) die Leistung in den Unterträgern (402) außerhalb des Satzes (412) und in dem anderen Symbol (408) anzeigt;
einer reduzierten Leistung (610) für das mindestens eine IM-Symbol (410) und/oder einer reduzierten Leistung (610) für mindestens ein oder jedes zukünftige IM-Symbol (410), optional wobei die reduzierte Leistung (610) die Leistung in den Unterträgern (402) außerhalb des Satzes (412) und in dem jeweiligen IM-Symbol (410) anzeigt; und einem Leistungs-Backoff (810) für das mindestens eine IM-Symbol (410) und/oder einem Leistungs-Backoff (810) für mindestens ein oder jedes zukünftige IM-Symbol (410), optional wobei der Leistungs-Backoff (810) die Leistung in den Unterträgern (402) außerhalb des Satzes (412) und in dem jeweiligen IM-Symbol (410) relativ zu der Leistung in den Unterträgern (402) außerhalb des Satzes (412) und in dem anderen Symbol (408) anzeigt.

6. Verfahren (200) gemäß den Ansprüchen 4 und 5, wobei die eingestellte Leistung (608) mindestens eine ist von:
gleich oder größer als die reduzierte Leistung (610);
gleich oder kleiner als die Nennleistung (606); und
erhalten basierend auf dem empfangenen (204) mindestens einen CSI-Bericht.

7. Verfahren (200) gemäß Anspruch 5 oder 6, wobei die reduzierte Leistung (610) des mindestens einen oder jedes zukünftigen IM-Symbols (410) aus den OFDM-Symbolen (408, 410) basierend auf dem empfangenen (204) mindestens einen CSI-Bericht erhalten wird,
optional wobei mindestens eines von:
die reduzierte Leistung (610) eine abnehmende Funktion einer Kanalqualität ist, die durch den empfangenen (204) mindestens einen CSI-Bericht angezeigt wird, und/oder die reduzierte Leistung (610) verringert wird, bis eine Kanalqualität, die durch den mindestens einen CSI-Bericht angezeigt wird, ein Maximum oder Plateau annimmt, optional beginnend von der Nennleistung (606),
die reduzierte Leistung (610) erhöht wird, bis eine Kanalqualität, die durch den mindestens einen CSI-Bericht angezeigt wird, ein Maximum oder Plateau annimmt, optional beginnend von einem Minimum der reduzierten Leistung (610) oder einem Maximum des Leistungs-Backoffs (810); und/oder
wobei die reduzierte Leistung (610) des mindestens einen IM-Symbols (410) oder des mindestens einen oder jedes zukünftigen IM-Symbols (410) aus den OFDM-Symbolen (408, 410) eine zunehmende Funktion eines Abstands oder eines Pfadverlusts zwischen dem Netzwerkknoten (100) und der Funkvorrichtung (120) ist.

8. Verfahren (200) gemäß einem der Ansprüche 1 bis 7, wobei der Netzwerkknoten (100) mindestens eines von einem Leistungsverstärker, PA, für die Funkübertragung und einer Peak-to-Average-Power-Ratio-Reduktionseinheit, PAPR-Reduktionseinheit, für die OFDM-Symbole (408, 410) der Funkübertragung beinhaltet; und/oder ferner beinhaltend oder initiierend den Schritt des Übertragens einer Konfigurationsnachricht an die Funkvorrichtung (120), wobei die Konfigurationsnachricht mindestens eines von Folgendem anzeigt:
- die IM;
- das IM-Symbol (410);
- den Satz (412) von ZP-REs, optional ein ZP-CSI-Referenzsignal;
- die null oder mehr ZP-REs, optional ein NZP-CSI-Referenzsignal;
- die Nennleistung (606) für die OFDM-Symbole (404; 408);
- die reduzierte Leistung (610) des mindestens einen IM-Symbols (410); und
- den Leistungs-Backoff (810) des mindestens einen IM-Symbols (410), und/oder
wobei die null oder mehr NZP-REs (418) NZP-CSI-Referenzsignale, NZP-CSI-RS, (424) und/oder Datensignale (422) und/oder Demodulationsreferenzsignale, DM-RS, (422) der Funkübertragung beinhalten, und/oder
wobei die Konfigurationsnachricht die NZP-CSI-RSs (424) anzeigt, die einer CSI-Messung an der Funkvorrichtung (120) zugewiesen sind, und/oder
wobei die Konfigurationsnachricht die Planung der Datensignale (422) anzeigt, und/oder
wobei der CSI-Bericht einen Kanalqualitätsindikator, CQI, oder ein Signal-zu-Interferenz-und-Rauschen-Verhältnis, SINR, für die Funkübertragung basierend auf Folgendem anzeigt:
- einer Signalstärke, und
- einer Leistung von Rauschen und/oder Interferenz, die in dem Satz (412) von ZP-REs in der IM an der Funkvorrichtung (120) gemessen wird; optional
wobei eine spektrale Leistungsdichte des NZP-CSI-RS (424) kleiner als eine spektrale Leistungsdichte der Datensignale (422) der Funkübertragung ist.

9. Verfahren (200) gemäß einem der Ansprüche 1 bis 8, wobei eine oder die reduzierte Leistung (610) des mindestens einen IM-Symbols (410) einer linearen Kombination von mindestens zwei der ZP-REs (412; 414), der NZP-REs (422; 424), der NZP-CSI-RSs (424) und der Datensignale (422) entspricht,
optional wobei die lineare Kombination durch die Anzahl von REs (406) in dem jeweiligen IM-Symbol (410) und/oder eine spektrale Leistungsdichte in dem jeweiligen IM-Symbol (410) gewichtet wird; und/oder
wobei die ZP-REs (412; 414) mindestens eines von Folgendem beinhalten:
ZP-CSI-Ressourcen (412) für die IM, die optional den Satz (412) von ZP-REs (412; 414) definieren; und
stummgeschaltete oder nicht zugewiesene REs (420) eines physikalischen Downlink-Kanals des Netzwerkknotens (100), optional eines gemeinsam genutzten physikalischen Downlink-Kanals, PDSCH; und/oder
wobei das mindestens eine IM-Symbol (410) periodisch übertragen (202) wird und/oder der mindestens eine CSI-Bericht periodisch empfangen (204) wird; und/oder
wobei der Netzwerkknoten (100) mindestens eines von Folgendem bestimmt:
Unterträger, die den ZP-REs (412; 414) in dem mindestens einen IM-Symbol (410) zugewiesen sind; und
eine Anzahl der ZP-REs (412; 414) in dem mindestens einen IM-Symbol (410);
und/oder
wobei der Netzwerkknoten (100) mindestens eines von Folgendem bestimmt:
Unterträger, die den NZP-REs (418; 422; 424) in dem mindestens einen IM-Symbol (410) zugewiesen sind;
eine Anzahl der NZP-REs (418; 422; 424) in dem mindestens einen IM-Symbol (410);
und
eine Leistungsdichte der NZP-REs (418; 422; 424) in dem mindestens einen IM-Symbol (410).

10. Ein Netzwerkknoten (100) zum Steuern einer Verzerrung für eine Interferenzmessung, IM, durch Steuern einer Leistung in einer Funkübertragung von orthogonalen Frequenzmultiplex-Symbolen, OFDM-Symbolen, (408, 410) von dem Netzwerkknoten (100) an eine Funkvorrichtung (120), wobei der Netzwerkknoten (100) einen Speicher, der betreibbar ist, um Anweisungen zu speichern, und eine Verarbeitungsschaltung, die betreibbar ist, um die Anweisungen auszuführen, beinhaltet, sodass der Netzwerkknoten (100) zu Folgendem betreibbar ist:
Übertragen, von dem Netzwerkknoten (100) an die Funkvorrichtung (120), mindestens eines IM-Symbols (410) aus den OFDM-Symbolen (408, 410), wobei das mindestens eine IM-Symbol (410) Null-Leistungs-Ressourcenelemente, ZP-REs, (412; 414) und null oder mehr Nicht-Null-Leistungs-Ressourcenelemente, NZP-REs, (418) beinhaltet, wobei ein Satz (412) der ZP-REs (412; 414) der IM an der Funkvorrichtung (120) zugewiesen ist und wobei die spektrale Leistungsdichte in Ressourcenelementen, REs, (406) außerhalb des Satzes (412) und in dem mindestens einen IM-Symbol (410) kleiner oder gleich der spektralen Leistungsdichte in Ressourcenelementen, REs, (406) in einem beliebigen anderen Symbol (408) aus den OFDM-Symbolen (408, 410) als dem mindestens einen IM-Symbol (410) ist; und
Empfangen mindestens eines Kanalzustandsinformations-Berichts, CSI-Berichts, von der Funkvorrichtung (120), wobei der CSI-Bericht ein Ergebnis der IM basierend auf dem übertragenen (202) mindestens einen IM-Symbol (410) anzeigt.

11. Netzwerkknoten (100) gemäß Anspruch 10, ferner betreibbar zum Durchführen eines beliebigen der Schritte gemäß einem der Ansprüche 2 bis 9.

12. Ein Kommunikationssystem (1500; 1600), das einen Host-Computer (1530; 1610) umfasst, beinhaltend:
eine Verarbeitungsschaltung (1618), die konfiguriert ist zum Bereitstellen von Benutzerdaten; und
eine Kommunikationsschnittstelle (1616), die konfiguriert ist zum Weiterleiten von Benutzerdaten an ein zellulares oder Ad-hoc-Funknetzwerk (1510) zur Übertragung von einem Netzwerkknoten (100) an eine Funkvorrichtung (120; 1591; 1592; 1630),
wobei das Kommunikationssystem (1500; 1600) ferner den Netzwerkknoten (100) umfasst, wobei der Netzwerkknoten (100; 1512; 1620) eine Funkschnittstelle (1402; 1627) und eine Verarbeitungsschaltung (1404; 1628) beinhaltet, wobei die Verarbeitungsschaltung (1404; 1628) des Netzwerkknotens (100; 1512; 1620) konfiguriert ist zum Ausführen der Schritte gemäß einem der Ansprüche 1 bis 9.

13. Kommunikationssystem (1500; 1600) gemäß Anspruch 12, das ferner ein UE als die Funkvorrichtung (120; 1591; 1592; 1630) umfasst.

14. Kommunikationssystem (1500; 1600) gemäß Anspruch 12 oder 13, wobei das Funknetzwerk (1510) ferner eine Basisstation als den Netzwerkknoten (100; 1512; 1620) oder eine Funkvorrichtung (120; 1591; 1592; 1630), die als ein Gateway funktioniert, das konfiguriert ist zum Kommunizieren mit dem UE (120; 1591; 1592; 1630), beinhaltet.

15. Kommunikationssystem (1500; 1600) gemäß einem der Ansprüche 12 bis 14, wobei:
die Verarbeitungsschaltung (1618) des Host-Computers (1530; 1610) konfiguriert ist zum Ausführen einer Host-Anwendung (1612), wodurch die Benutzerdaten bereitgestellt werden; und
die Verarbeitungsschaltung (1404; 1628) des Netzwerkknotens (100; 1512; 1620) konfiguriert ist zum Ausführen einer Client-Anwendung (1632), die mit der Host-Anwendung (1612) assoziiert ist.

## Revendications

1. Un procédé (200) réalisé par un nœud de réseau (100) de contrôle d'une distorsion pour une mesure d'interférence, IM (*Interference Measurement*), par le contrôle d'une puissance dans une transmission radio de symboles OFDM (*Orthogonal Frequency-Division Multiplexing*, multiplexage par répartition orthogonale de la fréquence) (408, 410) du nœud de réseau (100) à un dispositif radio (120), le procédé (200) comprenant les étapes :
de transmission (202) au dispositif radio (120), d'au moins un symbole IM (410) d'entre les symboles OFDM (408, 410), dans lequel l'au moins un symbole IM (410) comprend des ZP RE (*Zero Power Resource Element,* élément de ressource à puissance nulle) (412 ; 414), et zéro ou davantage de NZP RE (*Non-Zero Power Resource Element*, élément de ressource à puissance non nulle) (418), dans lequel un ensemble (412) des ZP RE (412 ; 414) est alloué à l'IM au niveau du dispositif radio (120), et dans lequel la densité spectrale de puissance dans des RE (*Resource Element*, élément de ressource) (406) en dehors de l'ensemble (412) et dans ledit au moins un symbole IM (410) est inférieure ou égale à la densité spectrale de puissance dans des éléments de ressource, RE (406), dans n'importe quel symbole (408) d'entre les symboles OFDM (408, 410) autre que ledit au moins un symbole IM (410) ; et
de réception (204) d'au moins un rapport CSI (*Channel State Information*, information d'état du canal) en provenance du dispositif radio (120), dans lequel le rapport CSI est indicatif d'un résultat de l'IM sur la base de l'au moins un symbole IM (410) transmis (202).

2. Le procédé (200) de la revendication 1, dans lequel l'au moins un symbole IM (410) comprend au moins un ZP RE (414) non alloué pour l'IM au niveau du dispositif radio (120) ; et/ou
dans lequel une densité spectrale de puissance d'au moins un NZP RE (418) dans des sous-porteuses (402) en dehors de l'ensemble (412) et dans l'au moins un symbole IM (410) est inférieure à une densité spectrale de puissance dans les sous-porteuses (402) en dehors de l'ensemble (412) et dans l'autre symbole (408) autre que l'au moins un symbole IM (410) ; et/ou
dans lequel l'autre symbole (408) est dans un autre créneau autre qu'un créneau comprenant l'au moins un symbole IM (410),
facultativement dans lequel une densité spectrale de puissance de chacun des symboles (404) dans le créneau comprenant l'au moins un symbole IM (410) est inférieure à une densité spectrale de puissance de l'autre symbole (408) ou de chacun des autres symboles dans l'autre créneau autre que le créneau comprenant le symbole IM (410).

3. Le procédé (200) de l'une quelconque des revendications 1 à 2, comprenant ou initiant en outre au moins l'une des étapes :
d'établissement (206) d'une puissance (608 ; 610) d'au moins un ou de chaque symbole OFDM futur (408 ; 410) d'entre les symboles OFDM (408, 410), dans lequel la puissance établie (608 ; 610) dépend de l'au moins un rapport CSI reçu (204) ;
d'établissement (206) d'une puissance (608) d'au moins un ou de chaque autre symbole futur (408) d'entre les symboles OFDM (408, 410) autre que des symboles IM (410), dans lequel la puissance établie (608) dépend de l'au moins un rapport CSI reçu (204) ; et
d'établissement (206) d'une puissance (610) d'au moins un ou de chaque symbole IM futur (410) d'entre les symboles OFDM (408, 410), dans lequel la puissance établie (610) dépend de l'au moins un rapport CSI reçu (204).

4. Le procédé (200) de la revendication 3, dans lequel l'établissement (206) comprend l'établissement de la puissance d'au moins un ou de chaque élément de ressource, RE, dans le symbole (408 ; 410) respectif, et/ou
la puissance établie (608 ; 610) est une fonction décroissante d'une qualité de canal indiquée par l'au moins un rapport CSI reçu (204), et/ou
la puissance établie (608 ; 610) est une fonction croissante d'une distance ou d'une perte sur le trajet (*pathloss*) entre le nœud de réseau (100) et le dispositif radio (120), et/ou
la puissance établie (608 ; 610) est amenée à décroître jusqu'à ce qu'une qualité de canal indiquée par l'au moins un rapport CSI atteigne un maximum ou un plateau.

5. Le procédé (200) de l'une quelconque des revendications 1 à 4, comprenant ou initiant en outre l'étape d'obtention d'au moins l'un :
d'une puissance nominale (606) pour les symboles OFDM (404 ; 408), facultativement dans lequel la puissance nominale (606) est indicative de la puissance dans les sous-porteuses (402) en dehors de l'ensemble (412) et dans l'autre symbole (408) ;
d'une puissance réduite (610) pour l'au moins un symbole IM (410) et/ou d'une puissance réduite (610) pour au moins un ou chaque symbole IM futur (410),
facultativement dans lequel la puissance réduite (610) est indicative de la puissance dans les sous-porteuses (402) en dehors de l'ensemble (412) et dans le symbole IM (410) respectif ; et
d'un recul de puissance (810) pour l'au moins un symbole IM (410) et/ou d'un recul de puissance (810) pour au moins un ou chaque symbole IM futur (410), facultativement dans lequel le recul de puissance (810) est indicatif de la puissance dans les sous-porteuses (402) en dehors de l'ensemble (412) et dans le symbole IM (410) respectif par rapport à la puissance dans les sous-porteuses (402) en dehors de l'ensemble (412) et dans l'autre symbole (408).

6. Le procédé (200) des revendications 4 et 5, dans lequel la puissance établie (608) est au moins l'un de :
égale ou supérieure à la puissance réduite (610) ;
égale ou inférieure à la puissance nominale (606) ; et
obtenue sur la base de l'au moins un rapport CSI reçu (204).

7. Le procédé (200) de la revendication 5 ou de la revendication 6, dans lequel la puissance réduite (610) de l'au moins un ou de chaque symbole IM futur (410) d'entre les symboles OFDM (408, 410) est obtenue sur la base de l'au moins un rapport CSI reçu (204),
facultativement dans lequel au moins l'un de :
la puissance réduite (610) est une fonction décroissante d'une qualité de canal indiquée par l'au moins un rapport CSI reçu (204), et/ou
la puissance réduite (610) est amenée à décroître jusqu'à ce qu'une qualité de canal indiquée par l'au moins un rapport CSI atteigne un maximum ou un plateau,
facultativement en commençant à partir de la puissance nominale (606),
la puissance réduite (610) est amenée à croître jusqu'à ce qu'une qualité de canal indiquée par l'au moins un rapport CSI atteigne un maximum ou un plateau,
facultativement en commençant à partir d'un minimum de la puissance réduite (610) ou d'un maximum du recul de puissance (810) ; et/ou
dans lequel la puissance réduite (610) de l'au moins un symbole IM (410) ou de l'au moins un ou de chaque symbole IM futur (410) d'entre les symboles OFDM (408, 410) est une fonction croissante d'une distance ou d'une perte sur le trajet entre le nœud de réseau (100) et le dispositif radio (120).

8. Le procédé (200) de l'une quelconque des revendications 1 à 7, dans lequel le nœud de réseau (100) comprend au moins l'un d'un amplificateur de puissance, PA, pour la transmission radio et d'une unité de réduction de rapport de puissance crête à puissance moyenne, PAPR (*Peak-to-Average Power Ratio*), pour les symboles OFDM (408, 410) de la transmission radio ; et/ou
comprenant ou initiant en outre l'étape de transmission d'un message de configuration au dispositif radio (120), dans lequel le message de configuration est indicatif d'au moins l'un :
- de l'IM ;
- du symbole IM (410) ;
- de l'ensemble (412) de ZP RE, facultativement d'un signal de référence ZP CSI ;
- des zéro ou davantage de ZP RE, facultativement d'un signal de référence NZP CSI ;
- de la puissance nominale (606) pour les symboles OFDM (404 ; 408) ;
- de la puissance réduite (610) de l'au moins un symbole IM (410) ; et
- du recul de puissance (810) de l'au moins un symbole IM (410), et/ou
dans lequel les zéro ou davantage de NZP RE (418) comprennent des signaux de référence NZP CSI, des NZP CSI RS (424) et/ou des signaux de données (422) et/ou un signal de référence de démodulation, DM-RS, (422) de la transmission radio, et/ou dans lequel le message de configuration est indicatif des NZP CSI RS (424) alloués à une mesure CSI au niveau du dispositif radio (120), et/ou
dans lequel le message de configuration est indicatif de la planification des signaux de données (422), et/ou
dans lequel le rapport CSI est indicatif d'un indicateur de qualité de canal, CQI (*Channel Quality Indicator*), ou d'un rapport signal sur interférence plus bruit, SINR (*Signal-to-Interference and Noise Ratio*), pour la transmission radio sur la base :
- d'une intensité de signal, et
- d'une puissance de bruit et/ou d'interférence mesurée dans l'ensemble (412) de ZP RE dans l'IM au niveau du dispositif radio (120) ; facultativement
dans lequel une densité spectrale de puissance des NZP CSI RS (424) est inférieure à une densité spectrale de puissance des signaux de données (422) de la transmission radio.

9. Le procédé (200) de l'une quelconque des revendications 1 à 8, dans lequel une ou la puissance réduite (610) de l'au moins un symbole IM (410) correspond à une combinaison linéaire d'au moins deux des ZP RE (412 ; 414), des NZP RE (422 ; 424), des NZP CSI RS (424), et des signaux de données (422),
facultativement dans lequel la combinaison linéaire est pondérée par le nombre de RE (406) dans le symbole IM (410) respectif et/ou une densité spectrale de puissance dans le symbole IM (410) respectif ; et/ou
dans lequel les ZP RE (412 ; 414) comprennent au moins l'un :
des ressources ZP CSI (412) pour l'IM, définissant facultativement l'ensemble (412) de ZP RE (412 ; 414) ; et
des RE muets ou non alloués (420) d'un canal de liaison descendante physique du nœud de réseau (100), facultativement d'un canal partagé de liaison descendante physique, PDSCH (*Physical Downlink Shared Channel*) ; et/ou
dans lequel l'au moins un symbole IM (410) est périodiquement transmis (202) et/ou l'au moins un rapport CSI est périodiquement reçu (204) ; et/ou
dans lequel le nœud de réseau (100) détermine au moins l'un :
de sous-porteuses allouées aux ZP RE (412 ; 414) dans l'au moins un symbole IM (410) ; et
d'un nombre des ZP RE (412 ; 414) dans l'au moins un symbole IM (410) ; et/ou dans lequel le nœud de réseau (100) détermine au moins l'un :
de sous-porteuses allouées aux NZP RE (418 ; 422 ; 424) dans l'au moins un symbole IM (410) ;
d'un nombre des NZP RE (418 ; 422 ; 424) dans l'au moins un symbole IM (410) ;
et
d'une densité de puissance des NZP RE (418 ; 422 ; 424) dans l'au moins un symbole IM (410).

10. Un nœud de réseau (100) pour le contrôle d'une distorsion pour une mesure d'interférence, IM, par le contrôle d'une puissance dans une transmission radio de symboles OFDM (*Orthogonal Frequency-Division Multiplexing*, multiplexage par répartition orthogonale de la fréquence) (408, 410) du nœud de réseau (100) à un dispositif radio (120), le nœud de réseau (100) comprenant une mémoire opérationnelle pour stocker des instructions et une circuiterie de traitement opérationnelle pour exécuter les instructions, de telle sorte que le nœud de réseau (100) est opérationnel pour :
transmettre, du nœud de réseau (100) au dispositif radio (120), au moins un symbole IM (410) d'entre les symboles OFDM (408, 410), dans lequel l'au moins un symbole IM (410) comprend des ZP RE (*Zero Power Resource Element,* élément de ressource à puissance nulle) (412 ; 414), et zéro ou davantage de NZP RE (*Non-Zero Power Resource Element*, élément de ressource à puissance non nulle) (418), dans lequel un ensemble (412) des ZP RE (412 ; 414) est alloué à l'IM au niveau du dispositif radio (120), et dans lequel la densité spectrale de puissance dans des éléments de ressource, RE (406), en dehors de l'ensemble (412) et dans ledit au moins un symbole IM (410) est inférieure ou égale à la densité spectrale de puissance dans des éléments de ressource, RE (406), dans n'importe quel symbole (408) d'entre les symboles OFDM (408, 410) autre que ledit au moins un symbole IM (410) ; et
recevoir au moins un rapport CSI (*Channel State Information*, information d'état du canal) en provenance du dispositif radio (120), dans lequel le rapport CSI est indicatif d'un résultat de l'IM sur la base de l'au moins un symbole IM (410) transmis (202).

11. Le nœud de réseau (100) de la revendication 10, opérationnel en outre pour réaliser l'une quelconque des étapes de l'une quelconque des revendications 2 à 9.

12. Un système de communication (1500 ; 1600) incluant un ordinateur hôte (1530 ; 1610) comprenant :
une circuiterie de traitement (1618) configurée pour fournir des données d'utilisateur ; et
une interface de communication (1616) configurée pour réacheminer des données d'utilisateur jusqu'à un réseau radio cellulaire ou ad hoc (1510) pour une transmission d'un nœud de réseau (100) à un dispositif radio (120 ; 1591 ; 1592 ; 1630),
le système de communication (1500 ; 1600) incluant en outre le nœud de réseau (100),
dans lequel le nœud de réseau (100 ; 1512 ; 1620) comprend une interface radio (1402 ; 1627) et une circuiterie de traitement (1404 ; 1628), la circuiterie de traitement (1404 ; 1628) du nœud de réseau (100 ; 1512 ; 1620) étant configurée pour exécuter les étapes de l'une quelconque des revendications 1 à 9.

13. Le système de communication (1500 ; 1600) de la revendication 12, incluant en outre un UE en tant que dispositif radio (120 ; 1591 ; 1592 ; 1630).

14. Le système de communication (1500 ; 1600) de la revendication 12 ou de la revendication 13, dans lequel le réseau radio (1510) comprend en outre une station de base en tant que nœud de réseau (100 ; 1512 ; 1620), ou un dispositif radio (120 ; 1591 ; 1592 ; 1630) fonctionnant en tant que passerelle, qui est configuré pour communiquer avec l'UE (120 ; 1591 ; 1592 ; 1630).

15. Le système de communication (1500 ; 1600) de l'une quelconque des revendications 12 à 14, dans lequel :
la circuiterie de traitement (1618) de l'ordinateur hôte (1530 ; 1610) est configurée pour exécuter une application hôte (1612), fournissant de ce fait les données d'utilisateur ; et
la circuiterie de traitement (1404 ; 1628) du nœud de réseau (100 ; 1512 ; 1620) est configurée pour exécuter une application client (1632) associée à l'application hôte (1612).
